# EUROPEAN PATENT APPLICATION

(11) **EP 4 432 615 A1**
(43) Date of publication of application: **18.09.2024**
(21) Application number: 22889474.7
(22) Date of filing: 08.11.2022
(51) Int. Cl.: H04L 27/26

(54) **TRANSMISSION METHOD AND APPARATUS, DEVICE, AND STORAGE MEDIUM**

(30) Priority: 08.11.2021 CN 202111316435
(71) Applicant: Vivo Mobile Communication Co., Ltd., Dongguan, Guangdong 523863 (CN)
(72) Inventor: SUN, Bule, Dongguan, Guangdong 523863 (CN)
(74) Representative: Murgitroyd & Company
(86) International application number: PCT/CN2022/130506
(87) International publication number: WO 2023/078453

(57) **Abstract**

This application discloses a transmission method and apparatus, a device, and storage medium, and pertains to the field of communication technologies. The transmission method in this embodiment of this application includes: determining, by a communication device, a target transmission solution of a target signal, where the target transmission solution is a first transmission solution or a second transmission solution, the first transmission solution is a transmission solution based on an OFDM communication system, and the second transmission solution is a transmission solution based on an OTFS communication system.

## Description

### CROSS-REFERENCE TO RELATED APPLICATION

This application claims priority to Chinese Patent Application No. 202111316435.3, filed on November 8, 2021 in China and entitled "TRANSMISSION METHOD AND APPARATUS, DEVICE, AND STORAGE MEDIUM", which is incorporated herein by reference in its entirety.

### TECHNICAL FIELD

This application pertains to the field of communication technologies, and specifically relates to a transmission method and apparatus, a device, and a storage medium.

### BACKGROUND

Information can be transmitted in different dimensions and sent by using different waveforms.

In a current wireless communication system, orthogonal frequency division multiplexing (Orthogonal Frequency Division Multiplexing, OFDM) is a mainstream waveform. For a high-speed scenario, an orthogonal time frequency space (Orthogonal Time Frequency Space, OTFS) solution is expected to be used to implement efficient transmission in an environment with rich Doppler and delays in the future. However, there is no good solution to problems of co-existence and switching of OFDM and OTFS solutions and mode selection.

### SUMMARY

Embodiments of this application provide a transmission method and apparatus, a device, and a storage medium, so that problems of co-existence and switching of OFDM and OTFS solutions and mode selection can be resolved.

According to a first aspect, a transmission method is provided, and the method includes:
determining, by a communication device, a target transmission solution of a target signal, where the target transmission solution is a first transmission solution or a second transmission solution; where
the first transmission solution is a transmission solution based on an OFDM communication system, and the second transmission solution is a transmission solution based on an OTFS communication system.

According to a second aspect, a transmission apparatus is provided, and the apparatus includes:
a first determining module, configured to determine a target transmission solution of a target signal, where the target transmission solution is a first transmission solution or a second transmission solution; where
the first transmission solution is a transmission solution based on an OFDM communication system, and the second transmission solution is a transmission solution based on an OTFS communication system.

According to a third aspect, a communication device is provided. The communication device includes a processor, a memory, and a program or an instruction stored in the memory and executable on the processor, and when the program or the instruction is executed by the processor, steps of the method according to the first aspect are implemented.

According to a fourth aspect, a communication device is provided. The communication device includes a processor and a communication interface, and the processor is configured to:
determine a target transmission solution of a target signal, where the target transmission solution is a first transmission solution or a second transmission solution; where
the first transmission solution is a transmission solution based on an OFDM communication system, and the second transmission solution is a transmission solution based on an OTFS communication system.

According to a fifth aspect, a readable storage medium is provided. The readable storage medium stores a program or an instruction, and when the program or the instruction is executed by a processor, steps of the method according to the first aspect are implemented.

According to a sixth aspect, a chip is provided. The chip includes a processor and a communication interface, the communication interface is coupled to the processor, and the processor is configured to run a program or an instruction to implement steps of the method according to the first aspect.

According to a seventh aspect, a computer program/program product is provided. The computer program/program product is stored in a non-transitory storage medium, and the program/program product is executed by at least one processor to implement steps of the method according to the first aspect.

In the embodiments of this application, a target transmission solution of a target signal is determined as a transmission solution based on an OFDM communication system or a transmission solution based on an OTFS communication system, so that a radio environment and a transmission condition can be better matched, thereby implementing efficient communication transmission.

### BRIEF DESCRIPTION OF DRAWINGS

FIG. 1 is a structural diagram of a wireless communication system to which embodiments of this application can be applied;
FIG. 2 is a schematic diagram of a processing procedure of a receive end and a transmit end of an OTFS system according to an embodiment of this application;
FIG. 3 is a schematic diagram of a delay-Doppler domain channel according to an embodiment of this application;
FIG. 4 is a first schematic flowchart of a transmission method according to an embodiment of this application;
FIG. 5 is a second schematic flowchart of a transmission method according to an embodiment of this application;
FIG. 6 is a third schematic flowchart of a transmission method according to an embodiment of this application;
FIG. 7 is a schematic diagram of flexible selection of a transmission solution according to an embodiment of this application;
FIG. 8 is a schematic diagram of a structure of a transmission apparatus according to an embodiment of this application;
FIG. 9 is a schematic diagram of a structure of a communication device according to an embodiment of this application;
FIG. 10 is a schematic diagram of a hardware structure of a terminal according to an embodiment of this application; and
FIG. 11 is a schematic diagram of a hardware structure of a network side device according to an embodiment of this application.

### DESCRIPTION OF EMBODIMENTS

The following clearly describes technical solutions in embodiments of this application with reference to accompanying drawings in embodiments of this application. It is clear that the described embodiments are some but not all of embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that, the terms used in such a way is interchangeable in proper circumstances, so that the embodiments of this application can be implemented in an order other than the order illustrated or described herein. Objects classified by "first" and "second" are usually of a same type, and a quantity of objects is not limited. For example, there may be one or more first objects. In addition, in the description and the claims, "and/or" represents at least one of connected obj ects, and a character "/" generally represents an "or" relationship between associated objects.

It should be noted that, technologies described in the embodiments of this application are not limited to a Long Term Evolution (Long Term Evolution, LTE)/LTE-Advanced (LTE-Advanced, LTE-A) system, and can also be used in other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. A new radio (New Radio, NR) system is described in the following description for illustrative purposes, and NR terms are used in most of the following descriptions, although these technologies can also be applied to applications other than the NR system application, such as a 6th generation (6^{th} Generation, 6G) communication system.

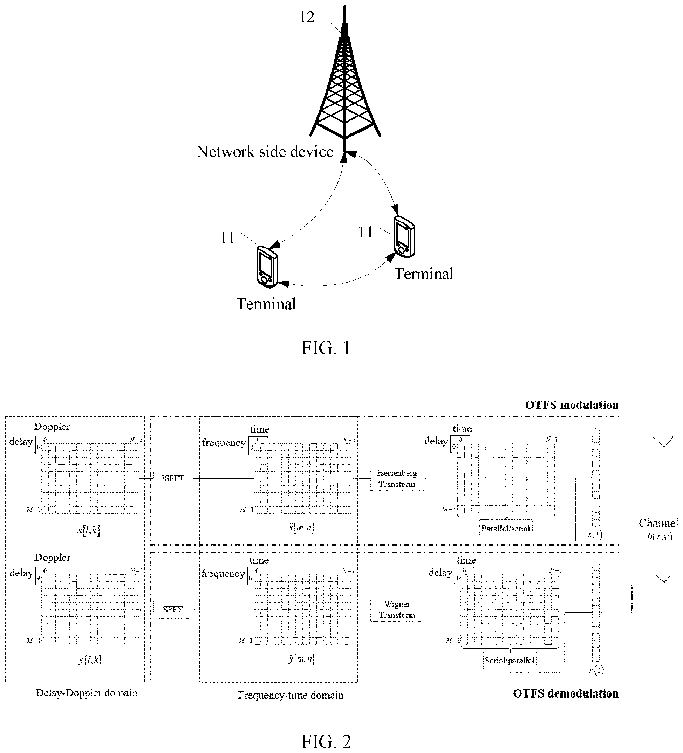

FIG. 1 is a structural diagram of a wireless communication system to which embodiments of this application can be applied. The wireless communication system includes a terminal 11 and a network side device 12. The terminal 11 may also be referred to as a terminal device or user equipment (User Equipment, UE). The terminal 11 may be a mobile phone, a tablet personal computer (Tablet Personal Computer), a laptop computer (Laptop Computer) that is alternatively referred to as a notebook computer, a personal digital assistant (Personal Digital Assistant, PDA), a palm computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle-mounted user equipment (VUE), pedestrian user equipment (PUE), or a smart home device (a home device with a wireless communication function, such as a refrigerator, a television, a washing machine, or furniture). The wearable device includes a smart watch, a smart band, a smart headset, smart glasses, smart jewelry (a smart bracelet, a smart anklet, a smart ring, a smart necklace, a smart chain, or the like), a smart wrist strap, a smart dress, a game console, and the like. It should be noted that a specific type of the terminal 11 is not limited in the embodiments of this application. The network side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmitting receiving point (Transmitting Receiving Point, TRP), or another suitable term in the field provided that a same technical effect is achieved. The base station is not limited to a specific technical term. It should be noted that, in the embodiments of this application, only a base station in an NR system is used as an example, but a specific type of the base station is not limited.

A transmission method and apparatus, a device, and a readable storage medium provided in the embodiments of this application are described below in detail with reference to the accompanying drawings by using some embodiments and application scenarios thereof.

First, the following content is described:

### (1) Orthogonal time frequency space (Orthogonal Time Frequency Space, OTFS)

In a time-invariant system, a channel impulse response (Channel Impulse Response, CIR) is time-invariant or has relatively long coherence time. However, as user mobility increases or a carrier frequency increases, frequency shift is caused to a channel due to a Doppler effect, and therefore, a spectrum fuzzy version of a transmitted signal is generated, that is, frequency dispersion. Due to co-existence of multi-path propagation and the Doppler effect, a transmission signal in a high-mobility scenario has double dispersion in a time domain and a frequency domain. In a conventional orthogonal frequency division multiplexing (Orthogonal Frequency Division Multiplexing, OFDM) modulation technology, symbols are modulated in a time-frequency domain, and this is widely used. However, in the high-mobility scenario, an OFDM waveform is subject to severe inter-carrier interference, and consequently, performance is significantly reduced. It should be noted that although the channel is quickly time-varying in the time-frequency domain, in a delay-Doppler domain, the channel represents intensity of a delay and Doppler shift in a scattering environment, that is, directly characterizes signal propagation characteristics in the high-mobility environment. Compared with the channel in the time-frequency domain, a channel in the delay-Doppler domain is characterized by sparsity, stability, and the like, and is extremely helpful for channel estimation, symbol detection, and the like.

Compared with that symbols are modulated in the time-frequency domain in OFDM, in orthogonal time-frequency domain (Orthogonal Time Frequency Space, OTFS), symbols are directly modulated in the delay-Doppler domain, so that a radio channel response characteristic in the delay-Doppler domain can be used. Specifically, in OTFS modulation, information in a data packet whose size is *M* × *N* is logically mapped to an *M* × *N* lattice point in a two-dimensional delay-Doppler plane; in other words, one symbol in the data packet is modulated in a pulse in each lattice point. Further, a data set on an *M* × *N* delay-Doppler domain plane is converted into an *N* × *M* time-frequency domain plane through inverse symplectic Fourier transform (Inverse Symplectic Fourier Transform, ISFFT). Then, symbol-level one-dimensional inverse fast Fourier transform (Inverse Fast Fourier Transform, IFFT) and serial-to-parallel conversion are performed on the data set to change the data set into a time domain sampling point for sending.

FIG. 2 is a schematic diagram of a processing procedure of a receive end and a transmit end of an OTFS system according to an embodiment of this application. The receive end of the OTFS system is approximately an inverse process of the transmit end. After a time-domain sampling point is received by the receive end, the time-domain sampling point is first converted into a waveform in a time-frequency domain plane through serial-to-parallel conversion and symbol-level one-dimensional inverse fast Fourier transform (Fast Fourier Transform, FFT), and then is converted into a waveform in a delay-Doppler domain plane through two-dimensional symplectic fast Fourier transform (Sympletic Fast Fourier Transform, SFFT), and a symbol carried in a waveform in a delay-Doppler domain is processed by the receive end, including channel estimation and equalization, demodulation and decoding, and the like.

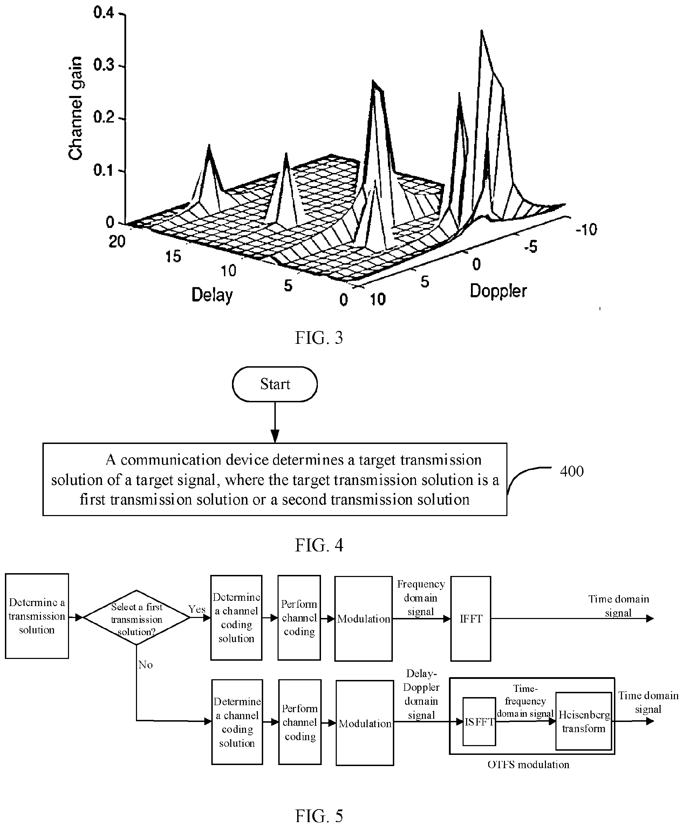

Because in an OTFS technology, a symbol is modulated in the delay-Doppler domain, a channel experienced by the symbol may be considered as a time-invariant two-dimensional delay-Doppler domain channel, thereby directly reflecting a channel delay-Doppler response characteristic in a radio link due to a geometric characteristic of a relative location of a reflector between transceivers. Compared with a conventional solution in which a delay and Doppler spread are modeled as disruptions to waveforms in a time domain, in OTFS, diversity characteristics in the delay and the Doppler spread is directly used to reduce impact caused by channel fading to performance. In addition, in a radio channel, a maximum delay *τ*ₘₐₓ and maximum Doppler spread *v*ₘₐₓ of the channel meet 4*τ*ₘₐₓ*v*ₘₐₓ ≤ 1, and therefore, all information of a channel *h*(*τ,v*) can be represented in a delay domain [0, *τ*ₘₐₓ] and a Doppler domain [-*v*ₘₐₓ, *v*ₘₐₓ]. In addition, in an actual system, because a quantity of delay paths and Doppler frequency shifts of a channel are far less than a quantity of time domain and frequency domain responses of the channel, FIG. 3 is a schematic diagram of a channel in a delay-Doppler domain according to an embodiment of this application. As shown in FIG. 3, a channel impulse response matrix represented by the delay-Doppler domain is sparse. Through analysis of a sparse channel matrix in the delay-Doppler domain by using the OTFS technology, a receiver algorithm can be simplified, and complexity in a conventional least mean square error based or zero-breaking solution can be reduced.

When the delay-Doppler domain is analyzed in the OTFS system, an additional signal processing process may be added to a transmit end by using an existing communication framework in a time-frequency domain. In addition, no new hardware module is needed for these additional processing, and a transmit/receive operation of the delay-Doppler domain can be implemented by using an existing hardware device. Specifically, additional signal processing at the transmit end only requires one Fourier transform, and additional signal processing at the receive end is inverse Fourier transform and corresponding channel estimation and detection decoding in the delay-Doppler domain. In an actual system, the OTFS technology may be easily implemented as a pre-processing module and a post-processing module of a filtered OFDM system, and therefore the OTFS technology has good compatibility with a multi-carrier system under an existing NR technology framework.

OTFS has the foregoing advantages. However, there are also some disadvantages. For example, because a manner in which a signal passes through a channel is to perform two-dimensional convolution with a delay-Doppler channel, when performing signal detection, the receive end either performs linear detection based on a large-dimensional matrix or performs iterative non-linear detection, and consequently, signal detection complexity is much higher than that of OFDM. In addition, signal processing in OTFS is performed by using a frame including a plurality of delay indexes and a plurality of Doppler indexes as at a minimum granularity, and channel estimation can be performed only by using a maximum of one frame as a granularity. When a channel estimation result is used in a next frame, a problem of mismatch easily occurs.

To resolve the foregoing disadvantages, in this embodiment of this application, OFDM or OTFS may be dynamically selected in an actual system, and information is carried in different domains to implement most efficient communication transmission.

FIG. 4 is a first schematic flowchart of a transmission method according to an embodiment of this application. As shown in FIG. 4, the procedure includes the following steps.

Step 400: A communication device determines a target transmission solution of a target signal, where the target transmission solution is a first transmission solution or a second transmission solution.

The first transmission solution is a transmission solution based on an OFDM communication system, and the second transmission solution is a transmission solution based on an OTFS communication system.

Optionally, the communication device may be a transmit side of the target signal, the transmit side of the target signal may be a terminal device, and a communication peer end (that is, a receive side of the target signal) of the communication device may be a terminal device or a network side device.

Optionally, the communication device may be a transmit side of the target signal, the transmit side of the target signal may be a network side device, and a communication peer end (that is, a receive side of the target signal) of the communication device may be a terminal device.

Optionally, the communication device may be a receive side of the target signal, the receive side of the target signal may be a terminal device, and a communication peer end (that is, a transmit side of the target signal) of the communication device may be a terminal device or a network side device.

Optionally, the communication device may be a receive side of the target signal, the receive side of the target signal may be a network side device, and a communication peer end (that is, a transmit side of the target signal) of the communication device may be a terminal device.

Specifically, to implement co-existence and timely switching of OFDM and OTFS solutions, in this embodiment of this application, the target transmission solution of the target signal may be determined, and a transmission solution of the target signal may be switched to the target transmission solution, that is, the target signal is switched to a domain corresponding to the target transmission solution for transmission, so that a proper transmission solution may be flexibly used to implement transmission of the target signal, thereby implementing efficient transmission of the target signal.

Optionally, in this embodiment of this application, there may be a transmission solution by default. For example, the transmission solution is the first transmission solution by default. In a case that the communication device determines that the target transmission solution of the target signal is the second transmission solution, the transmission solution of the target signal may be switched from the default transmission solution to the second transmission solution, and the default transmission solution may be used for all other time except a case in which the communication device determines that the target transmission solution of the target signal is the second transmission solution.

Optionally, in this embodiment of this application, there may be a transmission solution by default. For example, the transmission solution is the second transmission solution by default. In a case that the communication device determines that the target transmission solution of the target signal is the first transmission solution, the transmission solution of the target signal may be switched from the default transmission solution to the first transmission solution, and the default transmission solution may be used for all other time except a case in which the communication device determines that the target transmission solution of the target signal is the first transmission solution.

Specifically, the first transmission solution may be a transmission solution based on an OFDM communication system, and the second transmission solution may be a transmission solution based on an OTFS communication system.

In this embodiment of this application, the target transmission solution of the target signal is determined as the transmission solution based on the OFDM communication system or the transmission solution based on the OTFS communication system, so that the target signal is dynamically carried in different domains, and a radio environment and a transmission condition can be better matched, thereby implementing efficient communication transmission.

Optionally, in a case that the communication device determines that the target transmission solution of the target signal is the first transmission solution, the method further includes:
in a case that the communication device is a transmit side of the target signal, after mapping the target signal to a frequency domain or a time-frequency domain, converting, by the communication device, the target signal into a time domain to send the target signal; and
in a case that the communication device is a receive side of the target signal, after receiving the target signal, converting, by the communication device, the target signal into a frequency domain or a time-frequency domain for demodulation.

Optionally, in a case that the communication device determines that the target transmission solution of the target signal is the first transmission solution, that is, for a time unit that uses the first transmission solution, the transmit side of the target signal may map a modulated target signal to a frequency domain or a time-frequency domain, and perform inverse Fourier transform to convert the target signal into a time domain for sending, and a receive side of the target signal may perform Fourier transform on the received target signal and then demodulate and decode the target signal in the frequency domain or the time-frequency domain.

Specifically, if the communication device is the transmit side of the target signal, the communication device may map the target signal to the frequency domain or the time-frequency domain, and then convert the target signal in the frequency domain or the time-frequency domain into the time domain for sending.

Specifically, if the communication device is the receive side of the target signal, the communication device may perform Fourier transform on the received target signal to convert the target signal into the frequency domain or the time-frequency domain and then perform demodulation and decoding.

Optionally, in a case that the communication device determines that the target transmission solution of the target signal is the second transmission solution, the method further includes:
in a case that the communication device is a transmit side of the target signal, after mapping the target signal to a delay-Doppler domain, converting, by the communication device, the target signal into a time domain to send the target signal; and
in a case that the communication device is a receive side of the target signal, after receiving the target signal, converting, by the communication device, the target signal into a delay-Doppler domain for demodulation.

Optionally, in a case that the communication device determines that the target transmission solution of the target signal is the second transmission solution, that is, for a time unit that uses the second transmission solution, the transmit side of the target signal may map a modulated target signal to the delay-Doppler domain, perform specific transform (such as Heisenberg transform) to convert the target signal into the time-frequency domain, and then perform inverse Fourier transform to convert the target signal into the time domain for sending, and a receive side of the target signal may perform Fourier transform on the received target signal, then perform specific transform (such as Wigner transform) to convert the target signal into the delay-Doppler domain, and then perform demodulation and decoding in the delay-Doppler domain.

Specifically, if the communication device is the transmit side of the target signal, the communication device may map the target signal to the delay-Doppler domain, and then convert the target signal in the delay-Doppler domain into the time-frequency domain, and then perform inverse Fourier transform to convert the target signal into the time domain for sending.

Specifically, if the communication device is the receive side of the target signal, the communication device may perform Fourier transform on the received target signal to convert the target signal into the frequency domain or the time-frequency domain, perform Wigner transform to convert the target signal into the delay-Doppler domain, and then perform demodulation and decoding in the delay-Doppler domain.

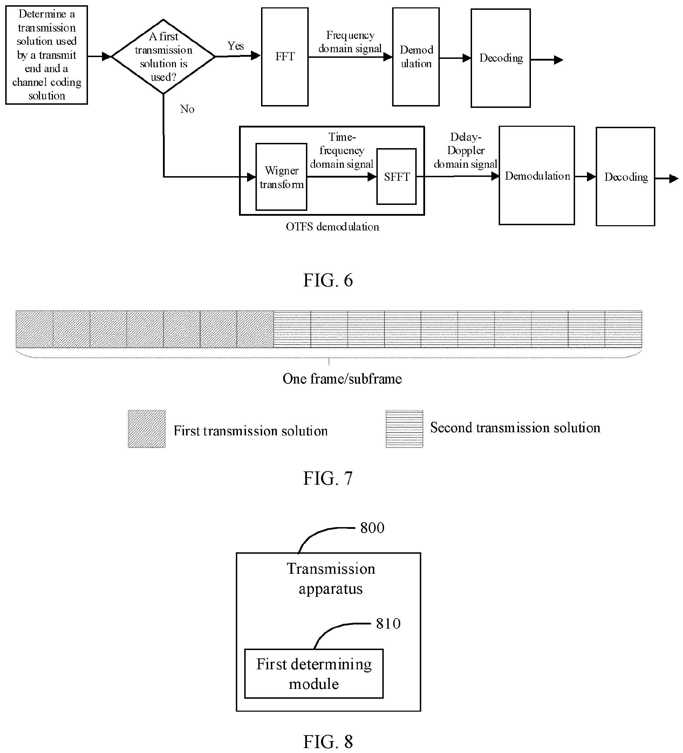

FIG. 5 is a second schematic flowchart of a transmission method according to an embodiment of this application. FIG. 6 is a third schematic flowchart of a transmission method according to an embodiment of this application. As shown in FIG. 5 and FIG. 6, in this embodiment of this application, a correspondence domain may be transformed based on a selected target transmission solution, and finally sending and receiving are performed in a time domain. IFFT represents inverse Fourier transform, ISFFT represents inverse symplectic fast Fourier transform, and Heisenberg transform generally may be replaced with a plurality of parallel IFFT.

Optionally, that a communication device determines a target transmission solution of a target signal includes:
determining, by the communication device, that a target transmission solution of a first part of the target signal is the first transmission solution and a target transmission solution of a second part of the target signal is the second transmission solution, where the first part and the second part belong to a same time unit or a same frequency unit.

Optionally, the target transmission solution may be flexibly selected for different parts belonging to a same time unit or a same frequency unit.

Specifically, for example, one time unit is one frame or one subframe, and the target transmission solution may be flexibly selected for a plurality of symbols of one frame or one subframe, that is, the first transmission solution is used for some symbols, and the second transmission solution is used for other symbols. FIG. 7 is a schematic diagram of flexible selection of a transmission solution according to an embodiment of this application. As shown in FIG. 7, a transmission solution may be flexibly selected for a plurality of symbols of one frame or one subframe, that is, the first transmission solution is used for some symbols, and the second transmission solution is used for other symbols. For example, it is determined that the second transmission solution is used based on speeds of the transmit end and the receive end (at a high speed). However, because the to-be-transmitted information includes a sounding reference signal, a symbol part that includes the sounding reference signal is transmitted by using the first transmission solution.

Optionally, for a time unit, a default transmission solution may be used for most of time, and the target transmission solution may be used for the other time.

For example, the default transmission solution is the first transmission solution. The first transmission solution is used for most symbols in a frame by default, that is, a target transmission solution of the most symbols is the first transmission solution; and for other symbols except symbols using the default transmission solution in the frame, the communication device may determine that a target transmission solution of these other symbols is the second transmission solution.

For example, the default transmission solution is the second transmission solution. The second transmission solution is used for most symbols in a frame by default, that is, a target transmission solution of the most symbols is the second transmission solution; and for other symbols except symbols using the default transmission solution in the frame, the communication device may determine that a target transmission solution of these other symbols is the first transmission solution.

Optionally, that a communication device determines a target transmission solution of a target signal includes:
determining, by the communication device, that a target transmission solution of a first channel is the first transmission solution and a target transmission solution of a second channel is the second transmission solution, where both the first channel and the second channel are channels that carry the target signal; where
in a case that the target signal is an uplink signal, the first channel includes at least one of the following: a physical uplink shared channel (Physical Uplink Shared Channel, PUSCH), a physical uplink control channel (Physical Uplink Control Channel, PUCCH), and a physical random access channel (Physical Random Access Channel, PRACH), and the second channel includes at least one of the following: a physical uplink shared channel (Physical Uplink Shared Channel, PUSCH), a physical uplink control channel (Physical Uplink Control Channel, PUCCH), and a physical random access channel (Physical Random Access Channel, PRACH);
or
in a case that the target signal is a downlink signal, the first channel includes at least one of the following: a physical downlink shared channel (Physical Downlink Shared Channel, PDSCH), a physical downlink control channel (Physical Downlink Control Channel, PDCCH), and a physical broadcast channel (Physical Broadcast Channel, PBCH), and the second channel includes at least one of the following: a physical downlink shared channel PDSCH, a physical downlink control channel PDCCH, and a physical broadcast channel PBCH;
or
in a case that both the communication device and a communication peer end are terminal devices, the first channel includes at least one of the following: a physical sidelink control channel (Physical SideLink Control Channel, PSCCH), a physical sidelink shared channel (Physical SideLink Shared Channel, PSSCH), a physical sidelink broadcast channel (Physical SideLink Broadcast Channel, PSBCH), a physical sidelink discovery channel (Physical Sidelink Discovery Channel, PSDCH), and a physical sidelink feedback channel (Physical SideLink Feedback Channel, PSFCH), and the second channel includes at least one of the following: a physical sidelink control channel (Physical SideLink Control Channel, PSCCH), a physical sidelink shared channel (Physical SideLink Shared Channel, PSSCH), a physical sidelink broadcast channel (Physical SideLink Broadcast Channel, PSBCH), a physical sidelink discovery channel (Physical Sidelink Discovery Channel, PSDCH), and a physical sidelink feedback channel (Physical SideLink Feedback Channel, PSFCH).

Optionally, a part of the target signal may be carried on a first channel and uses the first transmission solution, and the first channel may include one or more channels; and the other part of the target signal may be carried on a second channel and uses the second transmission solution, and the second channel may include one or more channels. The first channel and the second channel may include a same channel, partially same channels, or different channels.

Optionally, if the target signal is an uplink signal, the first channel may include at least one of the following:
a physical uplink shared channel PUSCH;
a physical uplink control channel PUCCH; and
a physical random access channel PRACH; and
the second channel may include at least one of the following:
   a physical uplink shared channel PUSCH;
   a physical uplink control channel PUCCH; and
   a physical random access channel PRACH.

Optionally, if the target signal is a downlink signal, the first channel may include at least one of the following:
a physical downlink shared channel PDSCH;
a physical downlink control channel PDCCH; and
a physical broadcast channel PBCH; and
the second channel is at least one of the following:
   a physical downlink shared channel PDSCH;
   a physical downlink control channel PDCCH; and
   a physical broadcast channel PBCH.

Optionally, if both the communication device and the communication peer end are terminal devices, the first channel may include at least one of the following:
a physical sidelink control channel PSCCH;
a physical sidelink shared channel PSSCH;
a physical sidelink broadcast channel PSBCH;
a physical sidelink discovery channel PSDCH; and
a physical sidelink feedback channel PSFCH; and
the second channel may include at least one of the following:
   a physical sidelink control channel PSCCH;
   a physical sidelink shared channel PSSCH;
   a physical sidelink broadcast channel PSBCH;
   a physical sidelink discovery channel PSDCH; and
   a physical sidelink feedback channel PSFCH.

Optionally, the target transmission solution is for at least one of the following channels, and transmission modes used by different channels may be the same or different:
a physical uplink shared channel PUSCH;
a physical uplink control channel PUCCH;
a physical downlink shared channel PDSCH;
a physical downlink control channel PDCCH;
a physical broadcast channel PBCH;
a physical random access channel PRACH;
a physical sidelink control channel PSCCH;
a physical sidelink shared channel PSSCH;
a physical sidelink broadcast channel PSBCH;
a physical sidelink discovery channel PSDCH; and
a physical sidelink feedback channel PSFCH.

Optionally, that a communication device determines a target transmission solution of a target signal includes:
determining, by the communication device, the target transmission solution of the target signal based on first information; where
the first information includes at least one of the following:
   a relative speed between the communication device and the communication peer end of the communication device;
   a quantity of paths between the communication device and the communication peer end;
   a signal type of the target signal;
   duration elapsed after the target transmission solution is previously used; and
   a delay between the communication device and the communication peer end.

Optionally, the communication device may determine the target transmission solution of the target signal based on first information.

Specifically, the first information includes at least one of the following:
a relative speed between the communication device and the communication peer end of the communication device;
a quantity of paths between the communication device and the communication peer end;
a signal type of the target signal;
duration elapsed after the target transmission solution is previously used; and
a delay between the communication device and the communication peer end.

Optionally, for the target signal or a time unit in which the target signal is located, there may be a default transmission solution; to be specific, generally, the default transmission solution may be directly used, and once the target transmission solution of the target signal is determined based on the first information, the default transmission solution may be switched to the target transmission solution to transmit the target signal.

For example, the default transmission solution is the first transmission solution. Generally, the first transmission solution may be used for other signals in the time unit in which the target signal is located, and once it is determined based on the first information that the target transmission solution of the target signal is the second transmission solution, a transmission solution may be switched from the default first transmission solution to the second transmission solution during transmission of the target signal.

For example, the default transmission solution is the second transmission solution. Generally, the second transmission solution may be used for other signals in the time unit in which the target signal is located, and once it is determined based on the first information that the target transmission solution of the target signal is the first transmission solution, a transmission solution may be switched from the default second transmission solution to the first transmission solution during transmission of the target signal.

Optionally, in a case that the first information includes the relative speed between the communication device and the communication peer end, that the communication device determines the target transmission solution of the target signal based on the first information includes:
in a case that the communication device determines that the relative speed is less than or equal to a first relative speed threshold, determining that the target transmission solution is the first transmission solution;
or
in a case that the communication device determines that the relative speed is greater than or equal to a second relative speed threshold, determining that the target transmission solution is the second transmission solution.

Optionally, in a case that the first information includes the relative speed between the communication device and the communication peer end, that the communication device determines the target transmission solution of the target signal based on the first information includes:
in a case that the communication device determines that the relative speed is less than or equal to a first relative speed threshold, determining that the target transmission solution is the first transmission solution.

Optionally, in a case that the first information includes the relative speed between the communication device and the communication peer end, the communication device may determine the target transmission solution of the target signal based on the relative speed between the communication device and the communication peer end.

Optionally, if the communication device may determine the target transmission solution of the target signal based on the relative speed between the communication device and the communication peer end, the communication device may determine that the target transmission solution is the first transmission solution in a case that the relative speed is less than or equal to the first relative speed threshold, for example, the relative speed between the communication device and the communication peer end is *v* , and *v* < Γ₁, where Γ₁ is the first relative speed threshold that is preset, predefined in a protocol, indicated by a higher layer, or indicated by the communication peer end.

For example, the default transmission solution is the second transmission solution. Generally, the second transmission solution may be used for other signals in the time unit in which the target signal is located, and once it is determined that the relative speed between the communication device and the communication peer end is less than or equal to the first relative speed threshold, it may be determined that the target transmission solution of the target signal is the first transmission solution, and a transmission solution may be switched from the default second transmission solution to the first transmission solution during transmission of the target signal.

Optionally, in a case that the first information includes the relative speed between the communication device and the communication peer end, that the communication device determines the target transmission solution of the target signal based on the first information includes:
in a case that the communication device determines that the relative speed is greater than or equal to a second relative speed threshold, determining that the target transmission solution is the second transmission solution.

Optionally, in a case that the first information includes the relative speed between the communication device and the communication peer end, the communication device may determine the target transmission solution of the target signal based on the relative speed between the communication device and the communication peer end.

Optionally, if the communication device may determine the target transmission solution of the target signal based on the relative speed between the communication device and the communication peer end, the communication device may determine that the target transmission solution is the second transmission solution in a case that the relative speed is greater than or equal to the second relative speed threshold, for example, the relative speed between the communication device and the communication peer end is *v* , and *v* ≥ Γ₂, where Γ₂ is the second relative speed threshold that is preset, predefined in a protocol, indicated by a higher layer, or indicated by the communication peer end.

For example, the default transmission solution is the first transmission solution. Generally, the first transmission solution may be used for other signals in the time unit in which the target signal is located, and once it is determined that the relative speed between the communication device and the communication peer end is greater than or equal to the second relative speed threshold, it may be determined that the target transmission solution of the target signal is the second transmission solution, and a transmission solution may be switched from the default first transmission solution to the second transmission solution during transmission of the target signal.

Optionally, in a case that the first information includes the quantity of paths between the communication device and the communication peer end, that the communication device determines the target transmission solution of the target signal based on the first information includes:
in a case that the communication device determines that the quantity of paths is less than or equal to a first path quantity threshold, determining that the target transmission solution is the first transmission solution;
or
in a case that the communication device determines that the quantity of paths is greater than or equal to a second path quantity threshold, determining that the target transmission solution is the second transmission solution.

Optionally, in a case that the first information includes the quantity of paths between the communication device and the communication peer end, that the communication device determines the target transmission solution of the target signal based on the first information includes:
in a case that the communication device determines that the quantity of paths is less than or equal to a first path quantity threshold, determining that the target transmission solution is the first transmission solution.

Optionally, in a case that the first information includes the quantity of paths between the communication device and the communication peer end, the communication device may determine the target transmission solution of the target signal based on the quantity of paths between the communication device and the communication peer end.

Optionally, if the communication device may determine the target transmission solution of the target signal based on the quantity of paths between the communication device and the communication peer end, the communication device may determine that the target transmission solution is the first transmission solution in a case that the quantity of paths is less than or equal to the first path quantity threshold, for example, the quantity of paths (or a quantity of path clusters) between the communication device and the communication peer end is *p,* and *p* ≥ Λ₁, where Λ₁ is the first path quantity threshold that is preset, predefined in a protocol, indicated by a higher layer, or indicated by the communication peer end.

For example, the default transmission solution is the second transmission solution. Generally, the second transmission solution may be used for other signals in the time unit in which the target signal is located, and once it is determined that the quantity of paths between the communication device and the communication peer end is less than or equal to the first path quantity threshold, it may be determined that the target transmission solution of the target signal is the first transmission solution, and a transmission solution may be switched from the default second transmission solution to the first transmission solution during transmission of the target signal.

Optionally, in a case that the first information includes the quantity of paths between the communication device and the communication peer end, that the communication device determines the target transmission solution of the target signal based on the first information includes:
in a case that the communication device determines that the quantity of paths is greater than or equal to a second path quantity threshold, determining that the target transmission solution is the second transmission solution.

Optionally, in a case that the first information includes the quantity of paths between the communication device and the communication peer end, the communication device may determine the target transmission solution of the target signal based on the quantity of paths between the communication device and the communication peer end.

Optionally, if the communication device may determine the target transmission solution of the target signal based on the quantity of paths between the communication device and the communication peer end, the communication device may determine that the target transmission solution is the second transmission solution in a case that the quantity of paths is greater than or equal to the second path quantity threshold, for example, the quantity of paths (or a quantity of path clusters) between the communication device and the communication peer end is *p* , and *p* ≥ Λ₂, where Λ₂ is the second path quantity threshold that is preset, predefined in a protocol, indicated by a higher layer, or indicated by the communication peer end.

For example, the default transmission solution is the first transmission solution. Generally, the first transmission solution may be used for other signals in the time unit in which the target signal is located, and once it is determined that the quantity of paths between the communication device and the communication peer end is greater than or equal to the second path quantity threshold, it may be determined that the target transmission solution of the target signal is the second transmission solution, and a transmission solution may be switched from the default first transmission solution to the second transmission solution during transmission of the target signal.

Optionally, in a case that the first information includes the signal type of the target signal, that the communication device determines the target transmission solution of the target signal based on the first information includes:
in a case that the communication device determines that the signal type of the target signal includes a sounding reference signal, determining that the target transmission solution is the first transmission solution;
or
in a case that the communication device determines that the signal type of the target signal includes a demodulation reference signal, determining that the target transmission solution is the second transmission solution.

Optionally, in a case that the first information includes the signal type of the target signal, that the communication device determines the target transmission solution of the target signal based on the first information includes:
in a case that the communication device determines that the signal type of the target signal includes a sounding reference signal, determining that the target transmission solution is the first transmission solution.

Optionally, in a case that the first information includes the signal type of the target signal, the communication device may determine the target transmission solution of the target signal based on the signal type of the target signal.

Optionally, if the communication device may determine the target transmission solution of the target signal based on the signal type of the target signal, the communication device may determine that the target transmission solution is the first transmission solution in a case of determining that the signal type of the target signal includes a sounding reference signal.

For example, the default transmission solution is the second transmission solution. Generally, the second transmission solution may be used for other signals in the time unit in which the target signal is located, and once it is determined that the signal type of the target signal includes a sounding reference signal, it may be determined that the target transmission solution of the target signal is the first transmission solution, and a transmission solution may be switched from the default second transmission solution to the first transmission solution during transmission of the target signal.

Optionally, in a case that the first information includes the signal type of the target signal, that the communication device determines the target transmission solution of the target signal based on the first information includes:
in a case that the communication device determines that the signal type of the target signal includes a demodulation reference signal, determining that the target transmission solution is the second transmission solution.

Optionally, in a case that the first information includes the signal type of the target signal, the communication device may determine the target transmission solution of the target signal based on the signal type of the target signal.

Optionally, if the communication device may determine the target transmission solution of the target signal based on the signal type of the target signal, the communication device may determine that the target transmission solution is the second transmission solution in a case of determining that the signal type of the target signal includes a demodulation reference signal.

For example, the default transmission solution is the first transmission solution. Generally, the first transmission solution may be used for other signals in the time unit in which the target signal is located, and once it is determined that the signal type of the target signal includes a demodulation reference signal, it may be determined that the target transmission solution of the target signal is the second transmission solution, and a transmission solution may be switched from the default first transmission solution to the second transmission solution during transmission of the target signal.

Optionally, in a case that the first information includes the duration elapsed after the target transmission solution is previously used, that the communication device determines the target transmission solution of the target signal based on the first information includes:
in a case that the communication device determines that the duration is greater than or equal to a first time threshold, determining that the target transmission solution is the first transmission solution;
or
in a case that the communication device determines that the duration is greater than or equal to a second time threshold, determining that the target transmission solution is the second transmission solution.

Optionally, in a case that the first information includes the duration elapsed after the target transmission solution is previously used, that the communication device determines the target transmission solution of the target signal based on the first information includes:
in a case that the communication device determines that the duration is greater than or equal to a first time threshold, determining that the target transmission solution is the first transmission solution.

Optionally, in a case that the first information includes the duration elapsed after the target transmission solution is previously used, the communication device may determine the target transmission solution of the target signal based on the duration elapsed after the target transmission solution is previously used.

Optionally, if the communication device may determine the target transmission solution of the target signal based on the duration elapsed after the target transmission solution is previously used, the communication device may determine that the target transmission solution is the first transmission solution in a case that the duration elapsed after the target transmission solution is previously used is greater than or equal to the first time threshold, for example, the duration elapsed after the target transmission solution is previously used is greater than or equal to *T*₁, where *T*₁ is the first time threshold that is preset, predefined in a protocol, indicated by a higher layer, or indicated by the communication peer end.

For example, the default transmission solution is the second transmission solution. Generally, the second transmission solution may be used for other signals in the time unit in which the target signal is located, and once it is determined that the duration elapsed after the target transmission solution is previously used is greater than or equal to the first time threshold, it may be determined that the target transmission solution of the target signal is the first transmission solution, and a transmission solution may be switched from the default second transmission solution to the first transmission solution during transmission of the target signal.

Optionally, in a case that the first information includes the duration elapsed after the target transmission solution is previously used, that the communication device determines the target transmission solution of the target signal based on the first information includes:
in a case that the communication device determines that the duration is greater than or equal to a second time threshold, determining that the target transmission solution is the second transmission solution.

Optionally, in a case that the first information includes the duration elapsed after the target transmission solution is previously used, the communication device may determine the target transmission solution of the target signal based on the duration elapsed after the target transmission solution is previously used.

Optionally, if the communication device may determine the target transmission solution of the target signal based on the duration elapsed after the target transmission solution is previously used, the communication device may determine that the target transmission solution is the second transmission solution in a case that the duration elapsed after the target transmission solution is previously used is greater than or equal to the second time threshold, for example, the duration elapsed after the target transmission solution is previously used is greater than or equal to time *T*₂, where *T*₂ is the second time threshold that is preset, predefined in a protocol, indicated by a higher layer, or indicated by the communication peer end.

For example, the default transmission solution is the first transmission solution. Generally, the first transmission solution may be used for other signals in the time unit in which the target signal is located, and once it is determined that the duration elapsed after the target transmission solution is previously used is greater than or equal to the second time threshold, it may be determined that the target transmission solution of the target signal is the second transmission solution, and a transmission solution may be switched from the default first transmission solution to the second transmission solution during transmission of the target signal.

Optionally, in a case that the first information includes the delay between the communication device and the communication peer end, that the communication device determines the target transmission solution of the target signal based on the first information includes:
in a case that the communication device determines that the delay is less than or equal to a first delay threshold, determining that the target transmission solution is the first transmission solution;
or
in a case that the communication device determines that the delay is greater than or equal to a second delay threshold, determining that the target transmission solution is the second transmission solution.

Optionally, in a case that the first information includes the delay between the communication device and the communication peer end, that the communication device determines the target transmission solution of the target signal based on the first information includes:
in a case that the communication device determines that the delay is less than or equal to a first delay threshold, determining that the target transmission solution is the first transmission solution.

Optionally, in a case that the first information includes the delay between the communication device and the communication peer end, the communication device may determine the target transmission solution of the target signal based on the delay between the communication device and the communication peer end.

Optionally, if the communication device may determine the target transmission solution of the target signal based on the delay between the communication device and the communication peer end, the communication device may determine that the target transmission solution is the first transmission solution in a case that it is determined that the delay between the communication device and the communication peer end is less than or equal to the first delay threshold, for example, the delay between the communication device and the communication peer end is less than or equal to the first delay threshold. For example, the delay between the communication device and the communication peer end may be a maximum delay *τₘₐₓ,* and *τₘₐₓ* < Δ₁, where Δ₁ is a maximum delay threshold (the first delay threshold) that is preset, predefined in a protocol, indicated by a higher layer, or indicated by the communication peer end; or the delay between the communication device and the communication peer end may be a root mean square delay spread (RMS delay spread) *τᵣₘₛ,* and *τᵣₘₛ* < Δ₂, where Δ₂ is a root mean square delay threshold (the first delay threshold) that is preset, predefined in a protocol, indicated by a higher layer, or indicated by the communication peer end.

For example, the default transmission solution is the second transmission solution. Generally, the second transmission solution may be used for other signals in the time unit in which the target signal is located, and once it is determined that the delay between the communication device and the communication peer end is less than or equal to the first delay threshold, it may be determined that the target transmission solution of the target signal is the first transmission solution, and a transmission solution may be switched from the default second transmission solution to the first transmission solution during transmission of the target signal.

Optionally, in a case that the first information includes the delay between the communication device and the communication peer end, that the communication device determines the target transmission solution of the target signal based on the first information includes:
in a case that the communication device determines that the delay is greater than or equal to a second delay threshold, determining that the target transmission solution is the second transmission solution.

Optionally, in a case that the first information includes the delay between the communication device and the communication peer end, the communication device may determine the target transmission solution of the target signal based on the delay between the communication device and the communication peer end.

Optionally, if the communication device may determine the target transmission solution of the target signal based on the delay between the communication device and the communication peer end, the communication device may determine that the target transmission solution is the second transmission solution in a case that it is determined that the delay between the communication device and the communication peer end is greater than or equal to the second delay threshold, for example, the delay between the communication device and the communication peer end is greater than or equal to the second delay threshold. For example, the delay between the communication device and the communication peer end may be a maximum delay *τₘₐₓ,* and *τₘₐₓ* > Δ₃, where Δ₃ is a maximum delay threshold (the second delay threshold) that is preset, predefined in a protocol, indicated by a higher layer, or indicated by the communication peer end; or the delay between the communication device and the communication peer end may be a root mean square delay spread (RMS delay spread) *τᵣₘₛ,* and *τᵣₘₛ* > Δ₄, where Δ₄ is a root mean square delay threshold (the second delay threshold) that is preset, predefined in a protocol, indicated by a higher layer, or indicated by the communication peer end.

For example, the default transmission solution is the first transmission solution. Generally, the second transmission solution may be used for other signals in the time unit in which the target signal is located, and once it is determined that the delay between the communication device and the communication peer end is greater than or equal to the second delay threshold, it may be determined that the target transmission solution of the target signal is the second transmission solution, and a transmission solution may be switched from the default first transmission solution to the second transmission solution during transmission of the target signal. Specifically, the communication device may determine that the target transmission solution of the target signal is the first transmission solution when determining that at least one of the following conditions is met, for example, may determine to switch from the default transmission solution to the first transmission solution when determining that at least one of the following conditions is met:
(1) The relative speed between the communication device and the communication peer end is *v*, and *v* < Γ₁, where Γ₁ is a first relative speed threshold that is preset, predefined in a protocol, indicated by a higher layer, or indicated by the communication peer end.
(2) The quantity of paths (or a quantity of path clusters) between the communication device and the communication peer end is *p* and *p* ≥ Λ₁, where Λ₁ is a first path quantity threshold that is preset, predefined in a protocol, indicated by a higher layer, or indicated by the communication peer end.
(3) The signal type of the target signal includes a sounding reference signal.
(4) The duration elapsed after the first transmission solution is previously used is greater than or equal to time *T*₁, where *T*₁ is a first time threshold that is preset, predefined in a protocol, indicated by a higher layer, or indicated by the communication peer end.
(5) The delay between the communication device and the communication peer end is less than or equal to the first delay threshold. For example, the delay between the communication device and the communication peer end may be a maximum delay *τₘₐₓ,* and *τₘₐₓ* < Δ₁, where Δ₁ is a maximum delay threshold (the first delay threshold) that is preset, predefined in a protocol, indicated by a higher layer, or indicated by the communication peer end; or the delay between the communication device and the communication peer end may be a root mean square delay spread (RMS delay spread). *τᵣₘₛ,* and *τᵣₘₛ* < Δ₂, where Δ₂ is a root mean square delay spread threshold (the first delay threshold) that is preset, predefined in a protocol, indicated by a higher layer, or indicated by the communication peer end.

Specifically, the communication device may determine that the target transmission solution of the target signal is the second transmission solution when determining that at least one of the following conditions is met, for example, may determine to switch from the default transmission solution to the second transmission solution when determining that at least one of the following conditions is met:
(1) The relative speed between the communication device and the communication peer end is *v*, and *v* ≥ Γ₂, where Γ₂ is a second relative speed threshold that is preset, predefined in a protocol, indicated by a higher layer, or indicated by the communication peer end.
(2) The quantity of paths (or a quantity of path clusters) between the communication device and the communication peer end is *p* , and *p* ≥ Λ₂, where Λ₂ is a second path quantity threshold that is preset, predefined in a protocol, indicated by a higher layer, or indicated by the communication peer end.
(3) The signal type of the target signal includes a demodulation reference signal.
(4) The duration elapsed after the second transmission solution is previously used is greater than or equal to time *T*₂, where T₂ is a second time threshold that is preset, predefined in a protocol, indicated by a higher layer, or indicated by the communication peer end.
(5) The delay between the communication device and the communication peer end is greater than or equal to a second delay threshold. For example, the delay between the communication device and the communication peer end may be a maximum delay *τₘₐₓ,* and *τₘₐₓ* > Δ₃, where Δ₃ is a maximum delay threshold (the second delay threshold) that is preset, predefined in a protocol, indicated by a higher layer, or indicated by the communication peer end; or the delay between the communication device and the communication peer end may be a root mean square delay spread (RMS delay spread) *τᵣₘₛ,* and *τᵣₘₛ >* Δ₄, where Δ₄ is a root mean square delay threshold (the second delay threshold) that is preset, predefined in a protocol, indicated by a higher layer, or indicated by the communication peer end.

Optionally, the first relative speed threshold and the second relative speed threshold may be equal or unequal.

Optionally, the first path quantity threshold and the second path quantity threshold may be equal or unequal.

Optionally, the first time threshold and the second time threshold may be equal or unequal.

Optionally, the first delay threshold and the second delay threshold may be equal or unequal.

Optionally, the method further includes:
determining a target channel code based on the quantity of paths between the communication device and the communication peer end.

Specifically, the OTFS system further has a special tradeoff problem of a diversity gain and a coding gain. When quantities of paths (quantities of path clusters) at the receive end and the transmit end are relatively small, a delay-Doppler diversity gain in the OTFS system is relatively small, and a coding gain obtained after channel coding is relatively high. On the contrary, if the quantities of paths (the quantities of path clusters) at the receive end and the transmit end are relatively large, the delay-Doppler diversity gain in the OTFS system is relatively large, and the coding gain obtained after channel coding is relatively low. This phenomenon does not exist in the OFDM system. Therefore, if an OTFS technology is used as a transmission solution, a channel coding solution that best matches a threshold needs to be further selected based on the quantity of paths (the quantity of path clusters) or the like, to avoid a case that transmission efficiency of a system is affected because channel coding with relatively high complexity or a relatively low bit rate is always used.

Therefore, after determining that the target transmission solution is the second transmission solution, the communication device may further determine the target channel code based on the quantity of paths between the communication device and the communication peer end.

Optionally, the determining a target channel code based on the quantity of paths between the communication device and the communication peer end includes at least one of the following:
determining that the target channel code is a channel code whose bit rate is proportional to the quantity of paths;
determining that the target channel code is a convolutional code whose constraint length is inversely proportional to the quantity of paths;
in a case that the quantity of paths is greater than or equal to a third path quantity threshold, determining that the channel code includes a channel code whose bit rate is greater than or equal to C;
in a case that the quantity of paths is greater than or equal to the fourth path quantity threshold, determining that the channel code includes a convolutional code whose constraint length is less than L;
in a case that the quantity of paths is less than a fifth path quantity threshold, determining that the channel code includes a channel code whose bit rate is less than or equal to C; and
in a case that the quantity of paths is less than a sixth path quantity threshold, determining that the channel code includes a convolutional code whose constraint length is greater than or equal to L; where
C is a positive number greater than 0 and less than 1, and L is a positive integer greater than or equal to 1.

Optionally, the communication device may determine that the target channel code is a channel code whose bit rate is proportional to the quantity of paths.

Specifically, the communication device may determine that a bit rate of the used channel code is proportional to the quantity of paths (or the quantity of path clusters), and this is applicable to any type of channel code. Common examples are a block code, a convolutional code, a low density parity check code (Low Density Parity Check, LDPC), a turbo code, and a polar code.

Optionally, the communication device may determine that the target channel code is a convolutional code whose constraint length is inversely proportional to the quantity of paths.

Specifically, when the used channel code is a convolutional code, a constraint length may be used as a description, that is, the communication device may determine that a constraint length of the used convolutional code is inversely proportional to the quantity of paths (or the number of path clusters).

Optionally, in a case that the quantity of paths is greater than or equal to the third path quantity threshold, the communication device may determine that the channel code includes a channel code whose bit rate is greater than or equal to C.

Optionally, in a case that the quantity of paths is greater than or equal to the fourth path quantity threshold, the communication device may determine that the channel code includes a convolutional code whose constraint length is less than L.

Optionally, in a case that the quantity of paths is less than a fifth path quantity threshold, the communication device may determine that the channel code includes a channel code whose bit rate is less than or equal to C.

Optionally, in a case that the quantity of paths is less than a sixth path quantity threshold, the communication device may determine that the channel code includes a convolutional code whose constraint length is greater than or equal to L.

C is a positive number greater than 0 and less than 1, and L is a positive integer greater than or equal to 1.

Specifically, because a larger quantity of paths (or a larger quantity of path clusters) leads to a larger diversity gain and a smaller coding gain, a simple code with a small coding gain but low complexity is used, such as a convolutional code with a relatively short constraint length, an LDPC code with a relatively high bit rate, a turbo code, and a polar code. On the contrary, because a smaller quantity of paths (or a smaller quantity of path clusters) leads to a smaller diversity gain and a larger coding gain, a coding solution with high complexity and a large coding gain is used, such as a convolutional code with a relatively long constraint length, an LDPC code with a relatively low bit rate, a turbo code, and a polar code.

Optionally, the third path quantity threshold, the fourth path quantity threshold, the fifth path quantity threshold, and the sixth path quantity threshold may be all equal or partially equal or unequal.

Optionally, the fifth path quantity threshold may be less than or slightly greater than the third path quantity threshold.

Optionally, the fifth path quantity threshold may be less than or slightly greater than the fourth path quantity threshold.

Optionally, the sixth path quantity threshold may be less than or slightly greater than the third path quantity threshold.

Optionally, the sixth path quantity threshold may be less than or slightly greater than the fourth path quantity threshold.

For example, in a case that the third path quantity threshold is equal to the fourth path quantity threshold and is equal to A, when the quantity of paths is greater than or equal to A, the following code solutions (a) and (b) may be selected for use:
(a) a channel code whose bit rate is greater than or equal to C, where the channel code may be any type of channel code, such as a block code, a convolutional code, an LDPC code, a turbo code, or a polar code; and
(b) a convolutional code whose constraint length is less than or equal to L.

L is a positive integer greater than 1, and C is a positive number greater than 0 and less than 1.

For example, in a case that the fifth path quantity threshold is equal to the sixth path quantity threshold and is equal to B, when the quantity of paths is less than or equal to B, the following code solutions (c) and (d) may be selected for use:
(c) a channel code whose bit rate is less than or equal to C, where the channel code may be any type of channel code, such as a block code, a convolutional code, an LDPC code, a turbo code, or a polar code; and
(d) a convolutional code whose constraint length is greater than or equal to L.

For example, in a case that the third path quantity threshold is equal to the fourth path quantity threshold, is equal to the fifth path quantity threshold, and is equal to the sixth path quantity threshold, any one of the code solutions (a) to (d) may be randomly selected or determined based on a predefinition.

Optionally, the method further includes:
after the target transmission solution of the target signal is determined, sending, by the communication device, first indication information to the communication peer end, where the first indication information is used to indicate at least one of the following:
the target transmission solution of the target signal;
a transmission parameter of the target transmission solution; and
a channel coding related parameter of the target transmission solution.

Specifically, transmission solution information used needs to be shared between a receive side and a transmit side of the target signal. The transmission solution information includes at least one of the following:
the used target transmission solution (the first transmission solution or the second transmission solution);
a transmission parameter of the used target transmission solution, such as a quantity of subcarriers, a quantity of symbols, a quantity of delay indexes, and a quantity of Doppler indexes; and
parameters (such as a code solution, a bit rate, and a constraint length) related to a channel code of the target transmission solution.

Therefore, after determining the target transmission solution of the target signal, the communication device sends the first indication information to the communication peer end, where the first indication information is used to indicate at least one of the following:
the target transmission solution of the target signal;
the transmission parameter of the target transmission solution; and
a channel coding related parameter of the target transmission solution.

Optionally, in a case that the communication device determines that the target transmission solution of the first part of the target signal is the first transmission solution and the target transmission solution of the second part of the target signal is the second transmission solution, the first indication information is specifically used to indicate at least one of the following:
the first part and at least one of the following: the target transmission solution of the first part is the first transmission solution; a transmission parameter of the first transmission solution; and a channel coding related parameter of the first transmission solution; and
the second part and at least one of the following: the target transmission solution of the second part is the second transmission solution; a transmission parameter of the second transmission solution; and a channel coding related parameter of the second transmission solution.

Optionally, a transmission solution may be flexibly selected for a plurality of parts in a time unit, that is, the first transmission solution is used for one part, and the second transmission solution is used for the other part.

Optionally, if different transmission solutions are used for a plurality of parts in a time unit, at least one of the following of each part needs to be shared: a target transmission solution, a transmission parameter of the target transmission solution, and a parameter related to a channel code of the target transmission solution.

Therefore, the first indication information may be specifically used to indicate at least one of the following:
the first part and at least one of the following: the target transmission solution of the first part is the first transmission solution; a transmission parameter of the first transmission solution; and a channel coding related parameter of the first transmission solution; and
the second part and at least one of the following: the target transmission solution of the second part is the second transmission solution; a transmission parameter of the second transmission solution; and a channel coding related parameter of the second transmission solution.

Optionally, in a case that the first indication information is downlink information, the first indication information is carried in at least one of the following:
DCI information;
radio resource control RRC signaling;
layer-1 signaling of a physical downlink control channel PDCCH;
information about a physical downlink shared channel PDSCH;
media access control control element MAC signaling;
a system information block SIB;
MSG 2 information of a physical random access channel PRACH;
MSG 4 information of a physical random access channel PRACH; and
MSG B information of a physical random access channel PRACH;
or
in a case that the first indication information is uplink information, the first indication information is carried in at least one of the following:
   layer-1 signaling of a physical uplink control channel PUCCH;
   MSG 1 information of a physical random access channel PRACH;
   MSG 3 information of a physical random access channel PRACH;
   MSG A information of a physical random access channel PRACH; and
   information about a physical uplink shared channel PUSCH;
   or
   in a case that both the communication device and the communication peer end are network side devices, the first indication information is carried in Xn interface signaling;
   or
   in a case that both the communication device and the communication peer end are terminal devices, the first indication information is carried in at least one of the following:
      PCS interface signaling; and
      sidelink interface signaling.

Specifically, in a case that the first indication information is downlink information, the first indication information is carried in at least one of the following:
DCI information;
radio resource control RRC signaling;
layer-1 signaling of a physical downlink control channel PDCCH;
information about a physical downlink shared channel PDSCH;
media access control control element MAC signaling;
a system information block SIB;
MSG 2 information of a physical random access channel PRACH;
MSG 4 information of a physical random access channel PRACH; and
MSG B information of a physical random access channel PRACH;
or
in a case that the first indication information is uplink information, the first indication information is carried in at least one of the following:
   layer-1 signaling of a physical uplink control channel PUCCH;
   MSG 1 information of a physical random access channel PRACH;
   MSG 3 information of a physical random access channel PRACH;
   MSG A information of a physical random access channel PRACH; and
   information about a physical uplink shared channel PUSCH;
   or
   in a case that both the communication device and the communication peer end are network side devices, the first indication information is carried in Xn interface signaling;
   or
   in a case that both the communication device and the communication peer end are terminal devices, the first indication information is carried in at least one of the following:
      PCS interface signaling; and
      sidelink interface signaling.
      Specifically, the first indication information may indicate at least one of the following:
         DCI information;
         radio resource control (RRC) signaling;
         layer-1 signaling of a physical downlink control channel (PDCCH);
         information about a physical downlink shared channel (PDSCH);
         media access control control element (MAC) signaling;
         a system information block (SIB);
         layer-1 signaling of a physical uplink control channel (PUCCH);
         MSG 1 information of a physical random access channel (PRACH);
         MSG 2 information of a physical random access channel (PRACH);
         MSG 3 information of a physical random access channel (PRACH);
         MSG 4 information of a physical random access channel (PRACH);
         MSG A information of a physical random access channel (PRACH);
         MSG B information of a physical random access channel (PRACH);
         information about a physical uplink shared channel (PUSCH);
         Xn interface signaling;
         PCS interface signaling; and
         sidelink (Sidelink) interface signaling.

Optionally, the first indication information is carried on a dedicated physical channel, and the dedicated physical channel is dedicated to transmission of an indication message between the communication device and the communication peer end.

Specifically, a dedicated physical channel, that is, a physical channel for exclusive use, may be defined, and the communication device notifies the peer end of at least one of the following:
the target transmission solution of the target signal;
the transmission parameter of the target transmission solution; and
a channel coding related parameter of the target transmission solution.

Optionally, the method further includes:
receiving, by the communication device, second indication information sent by the communication peer end, where the second indication information includes at least one of the following:
a speed of the communication peer end;
the relative speed between the communication device and the communication peer end; and
the quantity of paths.

Specifically, before determining the target transmission solution based on the first information, the target communication peer end needs to learn specific content of the first information. Therefore, the second indication information sent by the communication peer end may be received in advance, where the second indication information includes at least one of the following:
a speed of the communication peer end;
the relative speed between the communication device and the communication peer end; and
the quantity of paths.

Specifically, the receive end needs to report a speed *v*' and a quantity of paths (a quantity of path clusters) *p* of a channel to the communication device.

Optionally, in a case that the second indication information is downlink information, the second indication information is carried in at least one of the following:
DCI information;
radio resource control RRC signaling;
layer-1 signaling of a physical downlink control channel PDCCH;
information about a physical downlink shared channel PDSCH;
media access control control element MAC signaling;
a system information block SIB;
MSG 2 information of a physical random access channel PRACH;
MSG 4 information of a physical random access channel PRACH; and
MSG B information of a physical random access channel PRACH;
or
in a case that the second indication information is uplink information, the second indication information is carried in at least one of the following:
   layer-1 signaling of a physical uplink control channel PUCCH;
   MSG 1 information of a physical random access channel PRACH;
   MSG 3 information of a physical random access channel PRACH;
   MSG A information of a physical random access channel PRACH; and
   information about a physical uplink shared channel PUSCH;
   or
   in a case that both the communication device and the communication peer end are network side devices, the second indication information is carried in Xn interface signaling;
   or
   in a case that both the communication device and the communication peer end are terminal devices, the second indication information is carried in at least one of the following:
      PCS interface signaling; and
      sidelink interface signaling.

Optionally, in a case that the second indication information is downlink information, the second indication information is carried in at least one of the following:
DCI information;
radio resource control RRC signaling;
layer-1 signaling of a physical downlink control channel PDCCH;
information about a physical downlink shared channel PDSCH;
media access control control element MAC signaling;
a system information block SIB;
MSG 2 information of a physical random access channel PRACH;
MSG 4 information of a physical random access channel PRACH; and
MSG B information of a physical random access channel PRACH;
or
in a case that the second indication information is uplink information, the second indication information is carried in at least one of the following:
   layer-1 signaling of a physical uplink control channel PUCCH;
   MSG 1 information of a physical random access channel PRACH;
   MSG 3 information of a physical random access channel PRACH;
   MSG A information of a physical random access channel PRACH; and
   information about a physical uplink shared channel PUSCH;
   or
   in a case that both the communication device and the communication peer end are network side devices, the second indication information is carried in Xn interface signaling;
   or
   in a case that both the communication device and the communication peer end are terminal devices, the second indication information is carried in at least one of the following:
      PCS interface signaling; and
      sidelink interface signaling.

Specifically, the second indication information may include at least one of the following:
DCI information;
radio resource control (RRC) signaling;
layer-1 signaling of a physical downlink control channel (PDCCH);
information about a physical downlink shared channel (PDSCH);
media access control control element (MAC) signaling;
a system information block (SIB);
layer-1 signaling of a physical uplink control channel (PUCCH);
MSG 1 information of a physical random access channel (PRACH);
MSG 2 information of a physical random access channel (PRACH);
MSG 3 information of a physical random access channel (PRACH);
MSG 4 information of a physical random access channel (PRACH);
MSG A information of a physical random access channel (PRACH);
MSG B information of a physical random access channel (PRACH);
information about a physical uplink shared channel (PUSCH);
Xn interface signaling;
PCS interface signaling; and
sidelink (Sidelink) interface signaling.

Optionally, the second indication information is carried on a dedicated physical channel, and the dedicated physical channel is dedicated to transmission of an indication message between the communication device and the communication peer end.

Specifically, a dedicated physical channel, that is, a physical channel for exclusive use, may be defined, and the communication peer end notifies the communication device of at least one of the following:
a speed of the communication peer end;
the relative speed between the communication device and the communication peer end; and
the quantity of paths.

Optionally, that a communication device determines a target transmission solution of a target signal includes:
receiving, by the communication device, third indication information sent by the communication peer end; and
determining, by the communication device, at least one of the following based on the third indication information:
   the target transmission solution of the target signal;
   a transmission parameter of the target transmission solution; and
   a channel coding related parameter of the target transmission solution.

Specifically, the target transmission solution may also be notified to the communication device after the communication peer end determines the target transmission solution in the manners in the foregoing embodiments. Therefore, the communication device may determine at least one of the following based on the third indication information:
the target transmission solution of a target signal, where the target transmission solution of the target signal may be determined by the communication peer end;
a transmission parameter of the target transmission solution, where the transmission parameter of the target transmission solution may be determined by the communication peer end; and
a channel coding related parameter of the target transmission solution, where the channel coding related parameter of the target transmission solution may be determined by the communication peer end.

Optionally, that the communication device determines at least one of the following based on the third indication information: the target transmission solution of the target signal, a transmission parameter of the target transmission solution, and a channel coding related parameter of the target transmission solution includes:
determining, by the communication device, at least one of the following based on the third indication information:
the first part of the target signal and at least one of the following: the target transmission solution of the first part is the first transmission solution; a transmission parameter of the first transmission solution; and a channel coding related parameter of the first transmission solution; and
the second part of the target signal and at least one of the following: the target transmission solution of the second part is the second transmission solution; a transmission parameter of the second transmission solution; and a channel coding related parameter of the second transmission solution.

Specifically, the target transmission solution may also be notified to the communication device after the communication peer end determines the target transmission solution in the manners in the foregoing embodiments. In addition, the communication peer end may also indicate at least one of the following by using the third indication information after determining that different transmission solutions are used for a plurality of parts in a time unit:
the first part of the target signal and at least one of the following: the target transmission solution of the first part is the first transmission solution; a transmission parameter of the first transmission solution; and a channel coding related parameter of the first transmission solution; and
the second part of the target signal and at least one of the following: the target transmission solution of the second part is the second transmission solution; a transmission parameter of the second transmission solution; and a channel coding related parameter of the second transmission solution.

Specifically, the communication device determines at least one of the following based on the third indication information:
the first part of the target signal and at least one of the following: the target transmission solution of the first part is the first transmission solution; a transmission parameter of the first transmission solution; and a channel coding related parameter of the first transmission solution; and
the second part of the target signal and at least one of the following: the target transmission solution of the second part is the second transmission solution; a transmission parameter of the second transmission solution; and a channel coding related parameter of the second transmission solution.

Optionally, in a case that the third indication information is downlink information, the third indication information is carried in at least one of the following:
DCI information;
radio resource control RRC signaling;
layer-1 signaling of a physical downlink control channel PDCCH;
information about a physical downlink shared channel PDSCH;
media access control control element MAC signaling;
a system information block SIB;
MSG 2 information of a physical random access channel PRACH;
MSG 4 information of a physical random access channel PRACH; and
MSG B information of a physical random access channel PRACH;
or
in a case that the third indication information is uplink information, the third indication information is carried in at least one of the following:
   layer-1 signaling of a physical uplink control channel PUCCH;
   MSG 1 information of a physical random access channel PRACH;
   MSG 3 information of a physical random access channel PRACH;
   MSG A information of a physical random access channel PRACH; and
   information about a physical uplink shared channel PUSCH;
   or
   in a case that both the communication device and the communication peer end are network side devices, the third indication information is carried in Xn interface signaling;
   or
   in a case that both the communication device and the communication peer end are terminal devices, the third indication information is carried in at least one of the following:
      PCS interface signaling; and
      sidelink interface signaling.

Optionally, in a case that the third indication information is downlink information, the third indication information is carried in at least one of the following:
DCI information;
radio resource control RRC signaling;
layer-1 signaling of a physical downlink control channel PDCCH;
information about a physical downlink shared channel PDSCH;
media access control control element MAC signaling;
a system information block SIB;
MSG 2 information of a physical random access channel PRACH;
MSG 4 information of a physical random access channel PRACH; and
MSG B information of a physical random access channel PRACH;
or
in a case that the third indication information is uplink information, the third indication information is carried in at least one of the following:
   layer-1 signaling of a physical uplink control channel PUCCH;
   MSG 1 information of a physical random access channel PRACH;
   MSG 3 information of a physical random access channel PRACH;
   MSG A information of a physical random access channel PRACH; and
   information about a physical uplink shared channel PUSCH;
   or
   in a case that both the communication device and the communication peer end are network side devices, the third indication information is carried in Xn interface signaling;
   or
   in a case that both the communication device and the communication peer end are terminal devices, the third indication information is carried in at least one of the following:
      PCS interface signaling; and
      sidelink interface signaling.

Specifically, the third indication information may include at least one of the following:
DCI information;
radio resource control (RRC) signaling;
layer-1 signaling of a physical downlink control channel (PDCCH);
information about a physical downlink shared channel (PDSCH);
media access control control element (MAC) signaling;
a system information block (SIB);
layer-1 signaling of a physical uplink control channel (PUCCH);
MSG 1 information of a physical random access channel (PRACH);
MSG 2 information of a physical random access channel (PRACH);
MSG 3 information of a physical random access channel (PRACH);
MSG 4 information of a physical random access channel (PRACH);
MSG A information of a physical random access channel (PRACH);
MSG B information of a physical random access channel (PRACH);
information about a physical uplink shared channel (PUSCH);
Xn interface signaling;
PCS interface signaling; and
sidelink (Sidelink) interface signaling.

Optionally, the third indication information is carried on a dedicated physical channel, and the dedicated physical channel is dedicated to transmission of an indication message between the communication device and the communication peer end.

Specifically, a dedicated physical channel, that is, a physical channel for exclusive use, may be defined, and the communication peer end notifies the communication device of at least one of the following:
the target transmission solution of a target signal, where the target transmission solution of the target signal may be determined by the communication peer end;
a transmission parameter of the target transmission solution, where the transmission parameter of the target transmission solution may be determined by the communication peer end; and
a channel coding related parameter of the target transmission solution, where the channel coding related parameter of the target transmission solution may be determined by the communication peer end.

Optionally, the method further includes:
after determining the target transmission solution of the target signal, determining, by the communication device, at least one of the following based on a predefinition in a protocol:
a transmission parameter of the target transmission solution; and
a channel coding related parameter of the target transmission solution.

Specifically, the transmission parameter of the target transmission solution may be determined by the transmit side and the receive side of the target signal based on a predefinition in a protocol.

Specifically, the channel coding related parameter of the target transmission solution may be determined by the transmit side and the receive side of the target signal based on a predefinition in a protocol.

Specifically, the default transmission solution may be determined by the transmit side and the receive side of the target signal based on a predefinition in a protocol.

Specifically, the transmission parameter of the default transmission solution may be determined by the transmit side and the receive side of the target signal based on a predefinition in a protocol.

Specifically, a channel code of the default transmission solution may be determined by the transmit side and the receive side of the target signal based on a predefinition in a protocol.

In this embodiment of this application, the target transmission solution of the target signal is determined as the transmission solution based on the OFDM communication system or the transmission solution based on the OTFS communication system, so that the target signal is dynamically carried in different domains, and a radio environment and a transmission condition can be better matched, thereby implementing efficient communication transmission.

It should be noted that, the transmission method provided in the embodiments of this application may be performed by a transmission apparatus, or a control module in the transmission apparatus for performing the transmission method. The transmission apparatus provided in the embodiments of this application is described by using an example in which the transmission apparatus performs the transmission method.

FIG. 8 is a schematic diagram of a structure of a transmission apparatus according to an embodiment of this application. As shown in FIG. 8, the apparatus includes a first determining module 810.

The first determining module 810 is configured to determine a target transmission solution of a target signal, where the target transmission solution is a first transmission solution or a second transmission solution; where
the first transmission solution is a transmission solution based on an OFDM communication system, and the second transmission solution is a transmission solution based on an OTFS communication system.

In this embodiment of this application, the target transmission solution of the target signal is determined as the transmission solution based on the OFDM communication system or the transmission solution based on the OTFS communication system, so that the target signal is dynamically carried in different domains, and a radio environment and a transmission condition can be better matched, thereby implementing efficient communication transmission.

Optionally, in a case that the communication device determines that the target transmission solution of the target signal is the first transmission solution, the apparatus further includes:
a first mapping module, configured to: in a case that the communication device is a transmit side of the target signal, after mapping the target signal to a frequency domain or a time-frequency domain, convert the target signal into a time domain to send the target signal; and
a first conversion module, configured to: in a case that the communication device is a receive side of the target signal, after receiving the target signal, convert the target signal into a frequency domain or a time-frequency domain for demodulation.

Optionally, in a case that the communication device determines that the target transmission solution of the target signal is the second transmission solution, the apparatus further includes:
a second mapping module, configured to: in a case that the communication device is a transmit side of the target signal, after mapping the target signal to a delay-Doppler domain, convert the target signal into a time domain to send the target signal; and
a second conversion module, configured to: in a case that the communication device is a receive side of the target signal, after receiving the target signal, convert the target signal into a delay-Doppler domain for demodulation.

Optionally, the first determining module is specifically configured to:
determine that a target transmission solution of a first part of the target signal is the first transmission solution and a target transmission solution of a second part of the target signal is the second transmission solution, where the first part and the second part belong to a same time unit or a same frequency unit.

Optionally, the first determining module is specifically configured to:
determine that a target transmission solution of a first channel is the first transmission solution and a target transmission solution of a second channel is the second transmission solution, where both the first channel and the second channel are channels that carry the target signal; where
in a case that the target signal is an uplink signal, the first channel includes at least one of the following: a physical uplink shared channel PUSCH, a physical uplink control channel PUCCH, and a physical random access channel PRACH, and the second channel includes at least one of the following: a physical uplink shared channel PUSCH, a physical uplink control channel PUCCH, and a physical random access channel PRACH;
or
in a case that the target signal is a downlink signal, the first channel includes at least one of the following: a physical downlink shared channel PDSCH, a physical downlink control channel PDCCH, and a physical broadcast channel PBCH, and the second channel includes at least one of the following: a physical downlink shared channel PDSCH, a physical downlink control channel PDCCH, and a physical broadcast channel PBCH;
or
in a case that both the communication device and a communication peer end are terminal devices, the first channel includes at least one of the following: a physical sidelink control channel PSCCH, a physical sidelink shared channel PSSCH, a physical sidelink broadcast channel PSBCH, a physical sidelink discovery channel PSDCH, and a physical sidelink feedback channel PSFCH, and the second channel includes at least one of the following: a physical sidelink control channel PSCCH, a physical sidelink shared channel PSSCH, a physical sidelink broadcast channel PSBCH, a physical sidelink discovery channel PSDCH, and a physical sidelink feedback channel PSFCH.

Optionally, the first determining module is specifically configured to:
determine the target transmission solution of the target signal based on first information; where
the first information includes at least one of the following:
   a relative speed between the communication device and the communication peer end of the communication device;
   a quantity of paths between the communication device and the communication peer end;
   a signal type of the target signal;
   duration elapsed after the target transmission solution is previously used; and
   a delay between the communication device and the communication peer end.

Optionally, in a case that the first information includes the relative speed between the communication device and the communication peer end, the first determining module is specifically configured to:
in a case that the communication device determines that the relative speed is less than or equal to a first relative speed threshold, determine that the target transmission solution is the first transmission solution;
or
in a case that the communication device determines that the relative speed is greater than or equal to a second relative speed threshold, determine that the target transmission solution is the second transmission solution.

Optionally, in a case that the first information includes the quantity of paths between the communication device and the communication peer end, the first determining module is specifically configured to:
in a case that the communication device determines that the quantity of paths is less than or equal to a first path quantity threshold, determine that the target transmission solution is the first transmission solution;
or
in a case that the communication device determines that the quantity of paths is greater than or equal to a second path quantity threshold, determine that the target transmission solution is the second transmission solution.

Optionally, in a case that the first information includes the signal type of the target signal, the first determining module is specifically configured to:
in a case that the communication device determines that the signal type of the target signal includes a sounding reference signal, determine that the target transmission solution is the first transmission solution;
or
in a case that the communication device determines that the signal type of the target signal includes a demodulation reference signal, determine that the target transmission solution is the second transmission solution.

Optionally, in a case that the first information includes the duration elapsed after the target transmission solution is previously used, the first determining module is specifically configured to:
in a case that the communication device determines that the duration is less than or equal to a first time threshold, determine that the target transmission solution is the first transmission solution;
or
in a case that the communication device determines that the duration is greater than or equal to a second time threshold, determine that the target transmission solution is the second transmission solution.

Optionally, in a case that the first information includes the delay between the communication device and the communication peer end, the first determining module is specifically configured to:
in a case that the communication device determines that the delay is less than or equal to a first delay threshold, determine that the target transmission solution is the first transmission solution;
or
in a case that the communication device determines that the delay is greater than or equal to a second delay threshold, determine that the target transmission solution is the second transmission solution.

Optionally, the apparatus further includes:
a second determining module, configured to: in a case that it is determined that the target transmission solution is the second transmission solution, determine a target channel code based on the quantity of paths between the communication device and the communication peer end.

Optionally, the second determining module is further configured to perform at least one of the following:
determining that the target channel code is a channel code whose bit rate is proportional to the quantity of paths;
determining that the target channel code is a convolutional code whose constraint length is inversely proportional to the quantity of paths;
in a case that the quantity of paths is greater than or equal to a third path quantity threshold, determining that the channel code includes a channel code whose bit rate is greater than or equal to C;
in a case that the quantity of paths is greater than or equal to the fourth path quantity threshold, determining that the channel code includes a convolutional code whose constraint length is less than L;
in a case that the quantity of paths is less than a fifth path quantity threshold, determining that the channel code includes a channel code whose bit rate is less than or equal to C; and
in a case that the quantity of paths is less than a sixth path quantity threshold, determining that the channel code includes a convolutional code whose constraint length is greater than or equal to L; where
C is a positive number greater than 0 and less than 1, and L is a positive integer greater than or equal to 1.

Optionally, the apparatus further includes:
a first sending module, configured to: after the target transmission solution of the target signal is determined, send first indication information to the communication peer end, where the first indication information is used to indicate at least one of the following:
the target transmission solution of the target signal;
a transmission parameter of the target transmission solution; and
a channel coding related parameter of the target transmission solution.

Optionally, in a case that the communication device determines that the target transmission solution of the first part of the target signal is the first transmission solution and the target transmission solution of the second part of the target signal is the second transmission solution, the first indication information is specifically used to indicate at least one of the following:
the first part and at least one of the following: the target transmission solution of the first part is the first transmission solution; a transmission parameter of the first transmission solution; and a channel coding related parameter of the first transmission solution; and
the second part and at least one of the following: the target transmission solution of the second part is the second transmission solution; a transmission parameter of the second transmission solution; and a channel coding related parameter of the second transmission solution.

Optionally, in a case that the first indication information is downlink information, the first indication information is carried in at least one of the following:
DCI information;
radio resource control RRC signaling;
layer-1 signaling of a physical downlink control channel PDCCH;
information about a physical downlink shared channel PDSCH;
media access control control element MAC signaling;
a system information block SIB;
MSG 2 information of a physical random access channel PRACH;
MSG 4 information of a physical random access channel PRACH; and
MSG B information of a physical random access channel PRACH;
or
in a case that the first indication information is uplink information, the first indication information is carried in at least one of the following:
   layer-1 signaling of a physical uplink control channel PUCCH;
   MSG 1 information of a physical random access channel PRACH;
   MSG 3 information of a physical random access channel PRACH;
   MSG A information of a physical random access channel PRACH; and
   information about a physical uplink shared channel PUSCH;
   or
   in a case that both the communication device and the communication peer end are network side devices, the first indication information is carried in Xn interface signaling;
   or
   in a case that both the communication device and the communication peer end are terminal devices, the first indication information is carried in at least one of the following:
      PCS interface signaling; and
      sidelink interface signaling.

Optionally, the first indication information is carried on a dedicated physical channel, and the dedicated physical channel is dedicated to transmission of an indication message between the communication device and the communication peer end.

Optionally, the apparatus further includes:
a first receiving module, configured to receive second indication information sent by the communication peer end, where the second indication information includes at least one of the following:
a speed of the communication peer end;
the relative speed between the communication device and the communication peer end; and
the quantity of paths.

Optionally, in a case that the second indication information is downlink information, the second indication information is carried in at least one of the following:
DCI information;
radio resource control RRC signaling;
layer-1 signaling of a physical downlink control channel PDCCH;
information about a physical downlink shared channel PDSCH;
media access control control element MAC signaling;
a system information block SIB;
MSG 2 information of a physical random access channel PRACH;
MSG 4 information of a physical random access channel PRACH; and
MSG B information of a physical random access channel PRACH;
or
in a case that the second indication information is uplink information, the second indication information is carried in at least one of the following:
   layer-1 signaling of a physical uplink control channel PUCCH;
   MSG 1 information of a physical random access channel PRACH;
   MSG 3 information of a physical random access channel PRACH;
   MSG A information of a physical random access channel PRACH; and
   information about a physical uplink shared channel PUSCH;
   or
   in a case that both the communication device and the communication peer end are network side devices, the second indication information is carried in Xn interface signaling;
   or
   in a case that both the communication device and the communication peer end are terminal devices, the second indication information is carried in at least one of the following:
      PCS interface signaling; and
      sidelink interface signaling.

Optionally, the second indication information is carried on a dedicated physical channel, and the dedicated physical channel is dedicated to transmission of an indication message between the communication device and the communication peer end.

Optionally, the first determining module is specifically configured to:
receive third indication information sent by the communication peer end; and
determine at least one of the following based on the third indication information:
   the target transmission solution of the target signal;
   a transmission parameter of the target transmission solution; and
   a channel coding related parameter of the target transmission solution.

Optionally, the first determining module is specifically configured to:
determine at least one of the following based on the third indication information:
the first part of the target signal and at least one of the following: the target transmission solution of the first part is the first transmission solution; a transmission parameter of the first transmission solution; and a channel coding related parameter of the first transmission solution; and
the second part of the target signal and at least one of the following: the target transmission solution of the second part is the second transmission solution; a transmission parameter of the second transmission solution; and a channel coding related parameter of the second transmission solution.

Optionally, in a case that the third indication information is downlink information, the third indication information is carried in at least one of the following:
DCI information;
radio resource control RRC signaling;
layer-1 signaling of a physical downlink control channel PDCCH;
information about a physical downlink shared channel PDSCH;
media access control control element MAC signaling;
a system information block SIB;
MSG 2 information of a physical random access channel PRACH;
MSG 4 information of a physical random access channel PRACH; and
MSG B information of a physical random access channel PRACH;
or
in a case that the third indication information is uplink information, the third indication information is carried in at least one of the following:
   layer-1 signaling of a physical uplink control channel PUCCH;
   MSG 1 information of a physical random access channel PRACH;
   MSG 3 information of a physical random access channel PRACH;
   MSG A information of a physical random access channel PRACH; and
   information about a physical uplink shared channel PUSCH;
   or
   in a case that both the communication device and the communication peer end are network side devices, the third indication information is carried in Xn interface signaling;
   or
   in a case that both the communication device and the communication peer end are terminal devices, the third indication information is carried in at least one of the following:
      PCS interface signaling; and
      sidelink interface signaling.

Optionally, the third indication information is carried on a dedicated physical channel, and the dedicated physical channel is dedicated to transmission of an indication message between the communication device and the communication peer end.

Optionally, the apparatus further includes:
after determining the target transmission solution of the target signal, determining, by the communication device, at least one of the following based on a predefinition in a protocol:
a transmission parameter of the target transmission solution; and
a channel coding related parameter of the target transmission solution.

In this embodiment of this application, the target transmission solution of the target signal is determined as the transmission solution based on the OFDM communication system or the transmission solution based on the OTFS communication system, so that the target signal is dynamically carried in different domains, and a radio environment and a transmission condition can be better matched, thereby implementing efficient communication transmission.

The transmission apparatus in this embodiment of this application may be an apparatus or an electronic device having an operating system, or may be a component, an integrated circuit, or a chip in a terminal. The apparatus or the electronic device may be a mobile terminal, or a non-mobile terminal. For example, the mobile terminal may include but is not limited to the foregoing listed types of the terminal 11. The non-mobile terminal may be a server, a network attached storage (Network Attached Storage, NAS), a personal computer (personal computer, PC), a television (television, TV), a teller machine, a self-service machine, or the like. This is not specifically limited in this embodiment of this application.

The transmission apparatus provided in this embodiment of this application can implement the processes implemented in the method embodiments in FIG. 2 to FIG. 7, and a same technical effect can be achieved. To avoid repetition, details are not described herein again.

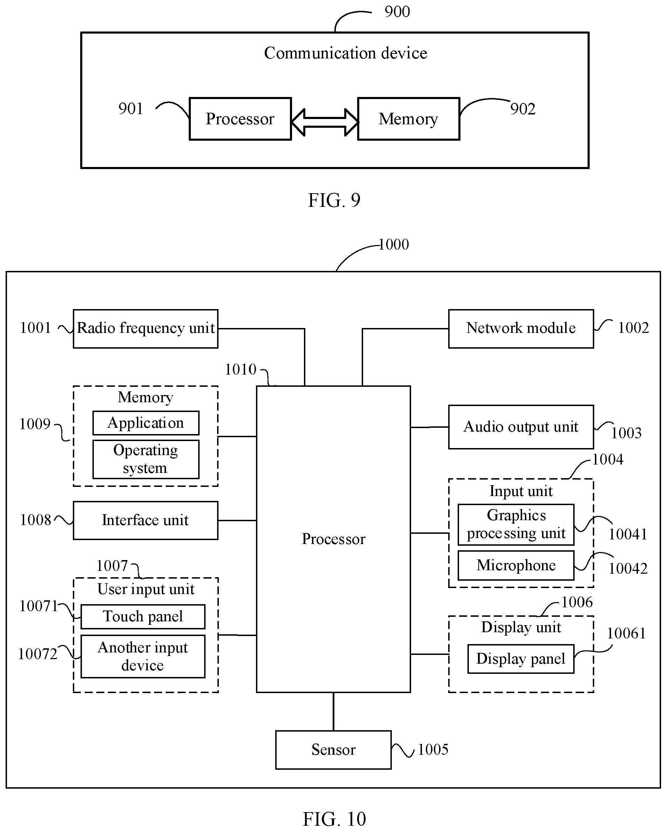

Optionally, FIG. 9 is a schematic diagram of a structure of a communication device according to an embodiment of this application. As shown in FIG. 9, an embodiment of this application further provides a communication device 900 including a processor 901, a memory 902, a program or an instruction stored in the memory 902 and executable on the processor 901. For example, when the communication device 900 is a terminal, and the program or the instruction is executed by the processor 901, the processes of the foregoing embodiments of the transmission method are implemented, and a same technical effect can be achieved. When the communication device 900 is a network side device, and the program or the instruction is executed by the processor 901, the processes of the foregoing embodiments of the transmission method are implemented, and a same technical effect can be achieved. To avoid repetition, details are not described herein again.

Optionally, the communication device may be a terminal device, and a communication peer end of the communication device may be a network side device or a terminal device.

An embodiment of this application further provides a terminal, including a processor and a communication interface.

The processor is configured to:
determine a target transmission solution of a target signal, where the target transmission solution is a first transmission solution or a second transmission solution; where
the first transmission solution is a transmission solution based on an OFDM communication system, and the second transmission solution is a transmission solution based on an OTFS communication system.

This terminal embodiment is corresponding to the foregoing method embodiment of the communication device. Each implementation process and implementation manner of the foregoing method embodiment may be applicable to this terminal embodiment, and a same technical effect can be achieved. Specifically, FIG. 10 is a schematic diagram of a hardware structure of a terminal according to an embodiment of this application.

A terminal 1000 includes but is not limited to at least a part of components such as a radio frequency unit 1001, a network module 1002, an audio output unit 1003, an input unit 1004, a sensor 1005, a display unit 1006, a user input unit 1007, an interface unit 1008, a memory 1009, and a processor 1010.

A person skilled in the art may understand that the terminal 1000 may further include a power supply (such as a battery) that supplies power to each component. The power supply may be logically connected to the processor 1010 by using a power supply management system, to implement functions such as charging and discharging management, and power consumption management by using the power supply management system. The terminal structure shown in FIG. 10 constitutes no limitation on the terminal, and the terminal may include more or fewer components than those shown in the figure, or combine some components, or have different component arrangements. Details are not described herein.

It should be understood that in this embodiment of this application, the input unit 1004 may include a graphics processing unit (Graphics Processing Unit, GPU) 10041 and a microphone 10042. The graphics processing unit 10041 processes image data of a static picture or a video obtained by an image capture apparatus (for example, a camera) in a video capture mode or an image capture mode. The display unit 1006 may include a display panel 10061. Optionally, the display panel 10061 may be configured in a form such as a liquid crystal display or an organic light-emitting diode. The user input unit 1007 includes a touch panel 10071 and another input device 10072. The touch panel 10071 is also referred to as a touchscreen. The touch panel 10071 may include two parts: a touch detection apparatus and a touch controller. The another input device 10072 may include but is not limited to a physical keyboard, a functional button (such as a volume control button or a power on/off button), a trackball, a mouse, and a joystick. Details are not described herein.

In this embodiment of this application, the radio frequency unit 1001 receives downlink data from a network side device and then sends the downlink data to the processor 1010 for processing; and sends uplink data to the network side device. Usually, the radio frequency unit 1001 includes but is not limited to an antenna, at least one amplifier, a transceiver, a coupler, a low noise amplifier, a duplexer, and the like.

The memory 1009 may be configured to store a software program or an instruction and various data. The memory 1009 may mainly include a program or instruction storage area and a data storage area. The program or instruction storage area may store an operating system, an application or an instruction required by at least one function (for example, a sound playing function or an image playing function), and the like. In addition, the memory 1009 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, a flash memory device, or another non-volatile solid-state storage device.

The processor 1010 may include one or more processing units. Optionally, an application processor and a modem processor may be integrated into the processor 1010. The application processor mainly processes an operating system, a user interface, an application, an instruction, or the like. The modem processor mainly processes wireless communication, for example, a baseband processor. It may be understood that, the modem processor may alternatively not be integrated into the processor 1010.

The processor 1010 is configured to:
determine a target transmission solution of a target signal, where the target transmission solution is a first transmission solution or a second transmission solution; where
the first transmission solution is a transmission solution based on an OFDM communication system, and the second transmission solution is a transmission solution based on an OTFS communication system.

In this embodiment of this application, the target transmission solution of the target signal is determined as the transmission solution based on the OFDM communication system or the transmission solution based on the OTFS communication system, so that the target signal is dynamically carried in different domains, and a radio environment and a transmission condition can be better matched, thereby implementing efficient communication transmission.

Optionally, in a case that the communication device determines that the target transmission solution of the target signal is the first transmission solution, the processor 1010 is further configured to:
in a case that the communication device is a transmit side of the target signal, after mapping the target signal to a frequency domain or a time-frequency domain, convert the target signal into a time domain to send the target signal; and
in a case that the communication device is a receive side of the target signal, after receiving the target signal, convert the target signal into a frequency domain or a time-frequency domain for demodulation.

Optionally, in a case that the communication device determines that the target transmission solution of the target signal is the second transmission solution, the processor 1010 is further configured to:
in a case that the communication device is a transmit side of the target signal, after mapping the target signal to a delay-Doppler domain, convert the target signal into a time domain to send the target signal; and
in a case that the communication device is a receive side of the target signal, after receiving the target signal, convert the target signal into a delay-Doppler domain for demodulation.

Optionally, the processor 1010 is further configured to:
determine that a target transmission solution of a first part of the target signal is the first transmission solution and a target transmission solution of a second part of the target signal is the second transmission solution, where the first part and the second part belong to a same time unit or a same frequency unit.

Optionally, the processor 1010 is further configured to:
determine that a target transmission solution of a first channel is the first transmission solution and a target transmission solution of a second channel is the second transmission solution, where both the first channel and the second channel are channels that carry the target signal; where
in a case that the target signal is an uplink signal, the first channel includes at least one of the following: a physical uplink shared channel PUSCH, a physical uplink control channel PUCCH, and a physical random access channel PRACH, and the second channel includes at least one of the following: a physical uplink shared channel PUSCH, a physical uplink control channel PUCCH, and a physical random access channel PRACH;
or
in a case that the target signal is a downlink signal, the first channel includes at least one of the following: a physical downlink shared channel PDSCH, a physical downlink control channel PDCCH, and a physical broadcast channel PBCH, and the second channel includes at least one of the following: a physical downlink shared channel PDSCH, a physical downlink control channel PDCCH, and a physical broadcast channel PBCH;
or
in a case that both the communication device and a communication peer end are terminal devices, the first channel includes at least one of the following: a physical sidelink control channel PSCCH, a physical sidelink shared channel PSSCH, a physical sidelink broadcast channel PSBCH, a physical sidelink discovery channel PSDCH, and a physical sidelink feedback channel PSFCH, and the second channel includes at least one of the following: a physical sidelink control channel PSCCH, a physical sidelink shared channel PSSCH, a physical sidelink broadcast channel PSBCH, a physical sidelink discovery channel PSDCH, and a physical sidelink feedback channel PSFCH.

Optionally, the processor 1010 is further configured to:
determine the target transmission solution of the target signal based on first information; where
the first information includes at least one of the following:
   a relative speed between the communication device and the communication peer end of the communication device;
   a quantity of paths between the communication device and the communication peer end;
   a signal type of the target signal;
   duration elapsed after the target transmission solution is previously used; and
   a delay between the communication device and the communication peer end.

Optionally, in a case that the first information includes the relative speed between the communication device and the communication peer end, the processor 1010 is further configured to:
in a case that the communication device determines that the relative speed is less than or equal to a first relative speed threshold, determine that the target transmission solution is the first transmission solution;
or
in a case that the communication device determines that the relative speed is greater than or equal to a second relative speed threshold, determine that the target transmission solution is the second transmission solution.

Optionally, in a case that the first information includes the quantity of paths between the communication device and the communication peer end, the processor 1010 is specifically configured to:
in a case that the communication device determines that the quantity of paths is less than or equal to a first path quantity threshold, determine that the target transmission solution is the first transmission solution;
or
in a case that the communication device determines that the quantity of paths is greater than or equal to a second path quantity threshold, determine that the target transmission solution is the second transmission solution.

Optionally, in a case that the first information includes the signal type of the target signal, the processor 1010 is further configured to:
in a case that the communication device determines that the signal type of the target signal includes a sounding reference signal, determine that the target transmission solution is the first transmission solution;
or
in a case that the communication device determines that the signal type of the target signal includes a demodulation reference signal, determine that the target transmission solution is the second transmission solution.

Optionally, in a case that the first information includes the duration elapsed after the target transmission solution is previously used, the processor 1010 is further configured to:
in a case that the communication device determines that the duration is less than or equal to a first time threshold, determine that the target transmission solution is the first transmission solution;
or
in a case that the communication device determines that the duration is greater than or equal to a second time threshold, determine that the target transmission solution is the second transmission solution.

Optionally, in a case that the first information includes the delay between the communication device and the communication peer end, the processor 1010 is specifically configured to:
in a case that the communication device determines that the delay is less than or equal to a first delay threshold, determine that the target transmission solution is the first transmission solution;
or
in a case that the communication device determines that the delay is greater than or equal to a second delay threshold, determine that the target transmission solution is the second transmission solution.

Optionally, the processor 1010 is further configured to:
in a case that it is determined that the target transmission solution is the second transmission solution, determine a target channel code based on the quantity of paths between the communication device and the communication peer end.

Optionally, the processor 1010 is further configured to perform at least one of the following:
determining that the target channel code is a channel code whose bit rate is proportional to the quantity of paths;
determining that the target channel code is a convolutional code whose constraint length is inversely proportional to the quantity of paths;
in a case that the quantity of paths is greater than or equal to a third path quantity threshold, determining that the channel code includes a channel code whose bit rate is greater than or equal to C;
in a case that the quantity of paths is greater than or equal to the fourth path quantity threshold, determining that the channel code includes a convolutional code whose constraint length is less than L;
in a case that the quantity of paths is less than a fifth path quantity threshold, determining that the channel code includes a channel code whose bit rate is less than or equal to C; and
in a case that the quantity of paths is less than a sixth path quantity threshold, determining that the channel code includes a convolutional code whose constraint length is greater than or equal to L; where
C is a positive number greater than 0 and less than 1, and L is a positive integer greater than or equal to 1.

Optionally, the processor 1010 is configured to:
after the target transmission solution of the target signal is determined, send, by the communication device, first indication information to the communication peer end, where the first indication information is used to indicate at least one of the following:
the target transmission solution of the target signal;
a transmission parameter of the target transmission solution; and
a channel coding related parameter of the target transmission solution.

Optionally, in a case that the communication device determines that the target transmission solution of the first part of the target signal is the first transmission solution and the target transmission solution of the second part of the target signal is the second transmission solution, the first indication information is specifically used to indicate at least one of the following:
the first part and at least one of the following: the target transmission solution of the first part is the first transmission solution; a transmission parameter of the first transmission solution; and a channel coding related parameter of the first transmission solution; and
the second part and at least one of the following: the target transmission solution of the second part is the second transmission solution; a transmission parameter of the second transmission solution; and a channel coding related parameter of the second transmission solution.

Optionally, in a case that the first indication information is downlink information, the first indication information is carried in at least one of the following:
DCI information;
radio resource control RRC signaling;
layer-1 signaling of a physical downlink control channel PDCCH;
information about a physical downlink shared channel PDSCH;
media access control control element MAC signaling;
a system information block SIB;
MSG 2 information of a physical random access channel PRACH;
MSG 4 information of a physical random access channel PRACH; and
MSG B information of a physical random access channel PRACH;
or
in a case that the first indication information is uplink information, the first indication information is carried in at least one of the following:
   layer-1 signaling of a physical uplink control channel PUCCH;
   MSG 1 information of a physical random access channel PRACH;
   MSG 3 information of a physical random access channel PRACH;
   MSG A information of a physical random access channel PRACH; and
   information about a physical uplink shared channel PUSCH;
   or
   in a case that both the communication device and the communication peer end are network side devices, the first indication information is carried in Xn interface signaling;
   or
   in a case that both the communication device and the communication peer end are terminal devices, the first indication information is carried in at least one of the following:
      PCS interface signaling; and
      sidelink interface signaling.

Optionally, the first indication information is carried on a dedicated physical channel, and the dedicated physical channel is dedicated to transmission of an indication message between the communication device and the communication peer end.

Optionally, the processor 1010 is further configured to:
receive second indication information sent by the communication peer end, where the second indication information includes at least one of the following:
a speed of the communication peer end;
the relative speed between the communication device and the communication peer end; and
the quantity of paths.

Optionally, in a case that the second indication information is downlink information, the second indication information is carried in at least one of the following:
DCI information;
radio resource control RRC signaling;
layer-1 signaling of a physical downlink control channel PDCCH;
information about a physical downlink shared channel PDSCH;
media access control control element MAC signaling;
a system information block SIB;
MSG 2 information of a physical random access channel PRACH;
MSG 4 information of a physical random access channel PRACH; and
MSG B information of a physical random access channel PRACH;
or
in a case that the second indication information is uplink information, the second indication information is carried in at least one of the following:
   layer-1 signaling of a physical uplink control channel PUCCH;
   MSG 1 information of a physical random access channel PRACH;
   MSG 3 information of a physical random access channel PRACH;
   MSG A information of a physical random access channel PRACH; and
   information about a physical uplink shared channel PUSCH;
   or
   in a case that both the communication device and the communication peer end are network side devices, the second indication information is carried in Xn interface signaling;
   or
   in a case that both the communication device and the communication peer end are terminal devices, the second indication information is carried in at least one of the following:
      PCS interface signaling; and
      sidelink interface signaling.

Optionally, the second indication information is carried on a dedicated physical channel, and the dedicated physical channel is dedicated to transmission of an indication message between the communication device and the communication peer end.

Optionally, the processor 1010 is further configured to:
receive third indication information sent by the communication peer end; and
determine at least one of the following based on the third indication information:
   the target transmission solution of the target signal;
   a transmission parameter of the target transmission solution; and
   a channel coding related parameter of the target transmission solution.

Optionally, the processor 1010 is further configured to:
determine, by the communication device, at least one of the following based on the third indication information:
the first part of the target signal and at least one of the following: the target transmission solution of the first part is the first transmission solution; a transmission parameter of the first transmission solution; and a channel coding related parameter of the first transmission solution; and
the second part of the target signal and at least one of the following: the target transmission solution of the second part is the second transmission solution; a transmission parameter of the second transmission solution; and a channel coding related parameter of the second transmission solution.

Optionally, in a case that the third indication information is downlink information, the third indication information is carried in at least one of the following:
DCI information;
radio resource control RRC signaling;
layer-1 signaling of a physical downlink control channel PDCCH;
information about a physical downlink shared channel PDSCH;
media access control control element MAC signaling;
a system information block SIB;
MSG 2 information of a physical random access channel PRACH;
MSG 4 information of a physical random access channel PRACH; and
MSG B information of a physical random access channel PRACH;
or
in a case that the third indication information is uplink information, the third indication information is carried in at least one of the following:
   layer-1 signaling of a physical uplink control channel PUCCH;
   MSG 1 information of a physical random access channel PRACH;
   MSG 3 information of a physical random access channel PRACH;
   MSG A information of a physical random access channel PRACH; and
   information about a physical uplink shared channel PUSCH;
   or
   in a case that both the communication device and the communication peer end are network side devices, the third indication information is carried in Xn interface signaling;
   or
   in a case that both the communication device and the communication peer end are terminal devices, the third indication information is carried in at least one of the following:
      PCS interface signaling; and
      sidelink interface signaling.

Optionally, the third indication information is carried on a dedicated physical channel, and the dedicated physical channel is dedicated to transmission of an indication message between the communication device and the communication peer end.

Optionally, the processor 1010 is further configured to:
after determining the target transmission solution of the target signal, determine, by the communication device, at least one of the following based on a predefinition in a protocol:
a transmission parameter of the target transmission solution; and
a channel coding related parameter of the target transmission solution.

In this embodiment of this application, the target transmission solution of the target signal is determined as the transmission solution based on the OFDM communication system or the transmission solution based on the OTFS communication system, so that the target signal is dynamically carried in different domains, and a radio environment and a transmission condition can be better matched, thereby implementing efficient communication transmission.

Optionally, the communication device may be a network side device, and the communication peer end of the communication device may be a terminal device.

An embodiment of this application further provides a network side device, including a processor and a communication interface.

The processor is configured to:
determine a target transmission solution of a target signal, where the target transmission solution is a first transmission solution or a second transmission solution; where
the first transmission solution is a transmission solution based on an OFDM communication system, and the second transmission solution is a transmission solution based on an OTFS communication system.

This network side device embodiment is corresponding to the foregoing method embodiment of the communication device. Each implementation process and implementation manner of the foregoing method embodiment may be applicable to the network side device embodiment, and a same technical effect can be achieved.

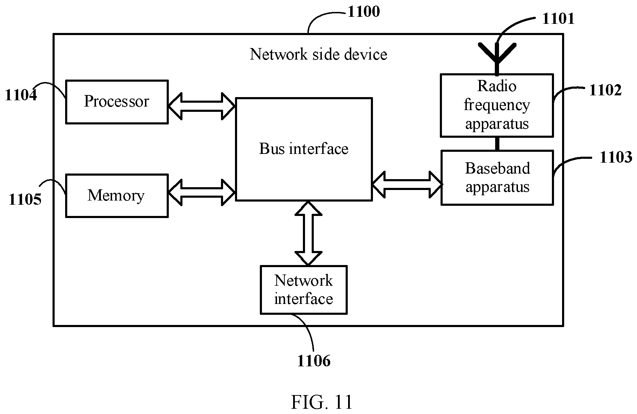

Specifically, an embodiment of this application further provides a network side device. FIG. 11 is a schematic diagram of a hardware structure of a network side device according to an embodiment of this application. As shown in FIG. 11, a network side device 1100 includes an antenna 1101, a radio frequency apparatus 1102, and a baseband apparatus 1103. The antenna 1101 is connected to the radio frequency apparatus 1102. In an uplink direction, the radio frequency apparatus 1102 receives information by using the antenna 1101, and sends the received information to the baseband apparatus 1103 for processing. In a downlink direction, the baseband apparatus 1103 processes information that needs to be sent, and sends processed information to the radio frequency apparatus 1102. The radio frequency apparatus 1102 processes the received information, and sends processed information by using the antenna 1101.

The frequency band processing apparatus may be located in the baseband apparatus 1103. The method performed by the network side device in the foregoing embodiment may be implemented in the baseband apparatus 1103. The baseband apparatus 1103 includes a processor 1104 and a memory 1105.

The baseband apparatus 1103 may include, for example, at least one baseband board, and a plurality of chips are disposed on the baseband board. As shown in FIG. 11, one chip is, for example, the processor 1104, and is connected to the memory 1105, to invoke a program in the memory 1105 to perform operations of a network device shown in the foregoing method embodiment.

The baseband apparatus 1103 may further include a network interface 1106, configured to exchange information with the radio frequency apparatus 1102. For example, the interface is a common public radio interface (common public radio interface, CPRI for short).

Specifically, the network side device in this embodiment of the present invention further includes an instruction or a program stored in the memory 1105 and executable on the processor 1104. The processor 1104 invokes the instruction or the program in the memory 1105 to perform the method performed by the modules shown in FIG. 8, and a same technical effect is achieved. To avoid repetition, details are not described herein again.

The processor 1104 is configured to:
determine a target transmission solution of a target signal, where the target transmission solution is a first transmission solution or a second transmission solution; where
the first transmission solution is a transmission solution based on an OFDM communication system, and the second transmission solution is a transmission solution based on an OTFS communication system.

In this embodiment of this application, the target transmission solution of the target signal is determined as the transmission solution based on the OFDM communication system or the transmission solution based on the OTFS communication system, so that the target signal is dynamically carried in different domains, and a radio environment and a transmission condition can be better matched, thereby implementing efficient communication transmission.

Optionally, in a case that the communication device determines that the target transmission solution of the target signal is the first transmission solution, the processor 1104 is further configured to:
in a case that the communication device is a transmit side of the target signal, after mapping the target signal to a frequency domain or a time-frequency domain, convert the target signal into a time domain to send the target signal; and
in a case that the communication device is a receive side of the target signal, after receiving the target signal, convert the target signal into a frequency domain or a time-frequency domain for demodulation.

Optionally, in a case that the communication device determines that the target transmission solution of the target signal is the second transmission solution, the processor 1104 is further configured to:
in a case that the communication device is a transmit side of the target signal, after mapping the target signal to a delay-Doppler domain, convert the target signal into a time domain to send the target signal; and
in a case that the communication device is a receive side of the target signal, after receiving the target signal, convert the target signal into a delay-Doppler domain for demodulation.

Optionally, the processor 1104 is further configured to:
determine that a target transmission solution of a first part of the target signal is the first transmission solution and a target transmission solution of a second part of the target signal is the second transmission solution, where the first part and the second part belong to a same time unit or a same frequency unit.

Optionally, the processor 1104 is further configured to:
determine that a target transmission solution of a first channel is the first transmission solution and a target transmission solution of a second channel is the second transmission solution, where both the first channel and the second channel are channels that carry the target signal; where
in a case that the target signal is an uplink signal, the first channel includes at least one of the following: a physical uplink shared channel PUSCH, a physical uplink control channel PUCCH, and a physical random access channel PRACH, and the second channel includes at least one of the following: a physical uplink shared channel PUSCH, a physical uplink control channel PUCCH, and a physical random access channel PRACH;
or
in a case that the target signal is a downlink signal, the first channel includes at least one of the following: a physical downlink shared channel PDSCH, a physical downlink control channel PDCCH, and a physical broadcast channel PBCH, and the second channel includes at least one of the following: a physical downlink shared channel PDSCH, a physical downlink control channel PDCCH, and a physical broadcast channel PBCH;
or
in a case that both the communication device and a communication peer end are terminal devices, the first channel includes at least one of the following: a physical sidelink control channel PSCCH, a physical sidelink shared channel PSSCH, a physical sidelink broadcast channel PSBCH, a physical sidelink discovery channel PSDCH, and a physical sidelink feedback channel PSFCH, and the second channel includes at least one of the following: a physical sidelink control channel PSCCH, a physical sidelink shared channel PSSCH, a physical sidelink broadcast channel PSBCH, a physical sidelink discovery channel PSDCH, and a physical sidelink feedback channel PSFCH.

Optionally, the processor 1104 is further configured to:
determine the target transmission solution of the target signal based on first information; where
the first information includes at least one of the following:
   a relative speed between the communication device and the communication peer end of the communication device;
   a quantity of paths between the communication device and the communication peer end;
   a signal type of the target signal;
   duration elapsed after the target transmission solution is previously used; and
   a delay between the communication device and the communication peer end.

Optionally, in a case that the first information includes the relative speed between the communication device and the communication peer end, the processor 1104 is further configured to:
in a case that the communication device determines that the relative speed is less than or equal to a first relative speed threshold, determine that the target transmission solution is the first transmission solution;
or
in a case that the communication device determines that the relative speed is greater than or equal to a second relative speed threshold, determine that the target transmission solution is the second transmission solution.

Optionally, in a case that the first information includes the quantity of paths between the communication device and the communication peer end, the processor 1104 is specifically configured to:
in a case that the communication device determines that the quantity of paths is less than or equal to a first path quantity threshold, determine that the target transmission solution is the first transmission solution;
or
in a case that the communication device determines that the quantity of paths is greater than or equal to a second path quantity threshold, determine that the target transmission solution is the second transmission solution.

Optionally, in a case that the first information includes the signal type of the target signal, the processor 1104 is further configured to:
in a case that the communication device determines that the signal type of the target signal includes a sounding reference signal, determine that the target transmission solution is the first transmission solution;
or
in a case that the communication device determines that the signal type of the target signal includes a demodulation reference signal, determine that the target transmission solution is the second transmission solution.

Optionally, in a case that the first information includes the duration elapsed after the target transmission solution is previously used, the processor 1104 is further configured to:
in a case that the communication device determines that the duration is less than or equal to a first time threshold, determine that the target transmission solution is the first transmission solution;
or
in a case that the communication device determines that the duration is greater than or equal to a second time threshold, determine that the target transmission solution is the second transmission solution.

Optionally, in a case that the first information includes the delay between the communication device and the communication peer end, the processor 1104 is specifically configured to:
in a case that the communication device determines that the delay is less than or equal to a first delay threshold, determine that the target transmission solution is the first transmission solution;
or
in a case that the communication device determines that the delay is greater than or equal to a second delay threshold, determine that the target transmission solution is the second transmission solution.

Optionally, the processor 1104 is further configured to:
in a case that it is determined that the target transmission solution is the second transmission solution, determine a target channel code based on the quantity of paths between the communication device and the communication peer end.

Optionally, the processor 1104 is further configured to perform at least one of the following:
determining that the target channel code is a channel code whose bit rate is proportional to the quantity of paths;
determining that the target channel code is a convolutional code whose constraint length is inversely proportional to the quantity of paths;
in a case that the quantity of paths is greater than or equal to a third path quantity threshold, determining that the channel code includes a channel code whose bit rate is greater than or equal to C;
in a case that the quantity of paths is greater than or equal to the fourth path quantity threshold, determining that the channel code includes a convolutional code whose constraint length is less than L;
in a case that the quantity of paths is less than a fifth path quantity threshold, determining that the channel code includes a channel code whose bit rate is less than or equal to C; and
in a case that the quantity of paths is less than a sixth path quantity threshold, determining that the channel code includes a convolutional code whose constraint length is greater than or equal to L; where
C is a positive number greater than 0 and less than 1, and L is a positive integer greater than or equal to 1.

Optionally, the processor 1104 is further configured to:
after the target transmission solution of the target signal is determined, send, by the communication device, first indication information to the communication peer end, where the first indication information is used to indicate at least one of the following:
the target transmission solution of the target signal;
a transmission parameter of the target transmission solution; and
a channel coding related parameter of the target transmission solution.

Optionally, in a case that the communication device determines that the target transmission solution of the first part of the target signal is the first transmission solution and the target transmission solution of the second part of the target signal is the second transmission solution, the first indication information is specifically used to indicate at least one of the following:
the first part and at least one of the following: the target transmission solution of the first part is the first transmission solution; a transmission parameter of the first transmission solution; and a channel coding related parameter of the first transmission solution; and
the second part and at least one of the following: the target transmission solution of the second part is the second transmission solution; a transmission parameter of the second transmission solution; and a channel coding related parameter of the second transmission solution.

Optionally, in a case that the first indication information is downlink information, the first indication information is carried in at least one of the following:
DCI information;
radio resource control RRC signaling;
layer-1 signaling of a physical downlink control channel PDCCH;
information about a physical downlink shared channel PDSCH;
media access control control element MAC signaling;
a system information block SIB;
MSG 2 information of a physical random access channel PRACH;
MSG 4 information of a physical random access channel PRACH; and
MSG B information of a physical random access channel PRACH;
or
in a case that the first indication information is uplink information, the first indication information is carried in at least one of the following:
   layer-1 signaling of a physical uplink control channel PUCCH;
   MSG 1 information of a physical random access channel PRACH;
   MSG 3 information of a physical random access channel PRACH;
   MSG A information of a physical random access channel PRACH; and
   information about a physical uplink shared channel PUSCH;
   or
   in a case that both the communication device and the communication peer end are network side devices, the first indication information is carried in Xn interface signaling;
   or
   in a case that both the communication device and the communication peer end are terminal devices, the first indication information is carried in at least one of the following:
      PCS interface signaling; and
      sidelink interface signaling.

Optionally, the first indication information is carried on a dedicated physical channel, and the dedicated physical channel is dedicated to transmission of an indication message between the communication device and the communication peer end.

Optionally, the processor 1104 is further configured to:
receive second indication information sent by the communication peer end, where the second indication information includes at least one of the following:
a speed of the communication peer end;
the relative speed between the communication device and the communication peer end; and
the quantity of paths.

Optionally, in a case that the second indication information is downlink information, the second indication information is carried in at least one of the following:
DCI information;
radio resource control RRC signaling;
layer-1 signaling of a physical downlink control channel PDCCH;
information about a physical downlink shared channel PDSCH;
media access control control element MAC signaling;
a system information block SIB;
MSG 2 information of a physical random access channel PRACH;
MSG 4 information of a physical random access channel PRACH; and
MSG B information of a physical random access channel PRACH;
or
in a case that the second indication information is uplink information, the second indication information is carried in at least one of the following:
   layer-1 signaling of a physical uplink control channel PUCCH;
   MSG 1 information of a physical random access channel PRACH;
   MSG 3 information of a physical random access channel PRACH;
   MSG A information of a physical random access channel PRACH; and
   information about a physical uplink shared channel PUSCH;
   or
   in a case that both the communication device and the communication peer end are network side devices, the second indication information is carried in Xn interface signaling;
   or
   in a case that both the communication device and the communication peer end are terminal devices, the second indication information is carried in at least one of the following:
      PCS interface signaling; and
      sidelink interface signaling.

Optionally, the second indication information is carried on a dedicated physical channel, and the dedicated physical channel is dedicated to transmission of an indication message between the communication device and the communication peer end.

Optionally, the processor 1104 is further configured to:
receive third indication information sent by the communication peer end; and
determine at least one of the following based on the third indication information:
   the target transmission solution of the target signal;
   a transmission parameter of the target transmission solution; and
   a channel coding related parameter of the target transmission solution.

Optionally, the processor 1104 is further configured to:
determine, by the communication device, at least one of the following based on the third indication information:
the first part of the target signal and at least one of the following: the target transmission solution of the first part is the first transmission solution; a transmission parameter of the first transmission solution; and a channel coding related parameter of the first transmission solution; and
the second part of the target signal and at least one of the following: the target transmission solution of the second part is the second transmission solution; a transmission parameter of the second transmission solution; and a channel coding related parameter of the second transmission solution.

Optionally, in a case that the third indication information is downlink information, the third indication information is carried in at least one of the following:
DCI information;
radio resource control RRC signaling;
layer-1 signaling of a physical downlink control channel PDCCH;
information about a physical downlink shared channel PDSCH;
media access control control element MAC signaling;
a system information block SIB;
MSG 2 information of a physical random access channel PRACH;
MSG 4 information of a physical random access channel PRACH; and
MSG B information of a physical random access channel PRACH;
or
in a case that the third indication information is uplink information, the third indication information is carried in at least one of the following:
   layer-1 signaling of a physical uplink control channel PUCCH;
   MSG 1 information of a physical random access channel PRACH;
   MSG 3 information of a physical random access channel PRACH;
   MSG A information of a physical random access channel PRACH; and
   information about a physical uplink shared channel PUSCH;
   or
   in a case that both the communication device and the communication peer end are network side devices, the third indication information is carried in Xn interface signaling;
   or
   in a case that both the communication device and the communication peer end are terminal devices, the third indication information is carried in at least one of the following:
      PCS interface signaling; and
      sidelink interface signaling.

Optionally, the third indication information is carried on a dedicated physical channel, and the dedicated physical channel is dedicated to transmission of an indication message between the communication device and the communication peer end.

Optionally, the processor 1104 is further configured to:
after determining the target transmission solution of the target signal, determine, by the communication device, at least one of the following based on a predefinition in a protocol:
a transmission parameter of the target transmission solution; and
a channel coding related parameter of the target transmission solution.

In this embodiment of this application, the target transmission solution of the target signal is determined as the transmission solution based on the OFDM communication system or the transmission solution based on the OTFS communication system, so that the target signal is dynamically carried in different domains, and a radio environment and a transmission condition can be better matched, thereby implementing efficient communication transmission.

An embodiment of this application further provides a readable storage medium. The readable storage medium stores a program or an instruction, and when the program or the instruction is executed by a processor, the processes of the foregoing embodiments of the transmission method are implemented, and a same technical effect can be achieved. To avoid repetition, details are not described herein again.

The processor is a processor in the terminal in the foregoing embodiments. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communication interface, the communication interface is coupled to the processor, and the processor is configured to run a program or an instruction to implement the processes of the foregoing embodiment of the transmission method, and a same technical effect can be achieved. To avoid repetition, details are not described herein again.

It should be understood that the chip mentioned in this embodiment of this application may also be referred to as a system-level chip, a system chip, a chip system, or a system on chip.

An embodiment of this application further provides a computer program/program product, the computer program/program product is stored in a non-transitory storage medium, and the computer program/program product is executed by at least one processor to implement the processes of the foregoing embodiments of the transmission method, and a same technical effect can be achieved. To avoid repetition, details are not described herein again.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. In absence of more constraints, an element preceded by "includes a..." does not preclude the existence of other identical elements in the process, method, article, or apparatus that includes the element. In addition, it should be noted that the scope of the methods and apparatuses in the embodiments of this application is not limited to performing functions in the order shown or discussed, but may also include performing the functions in a basically simultaneous manner or in opposite order based on the functions involved. For example, the described methods may be performed in a different order from the described order, and various steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be mobile phone, a computer, a server, a network device, or the like) to perform the methods described in the embodiments of this application.

The embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make many forms without departing from the purpose of this application and the protection scope of the claims, all of which fall within the protection of this application.

## Claims

1. A transmission method, comprising:
determining, by a communication device, a target transmission solution of a target signal, wherein the target transmission solution is a first transmission solution or a second transmission solution; wherein
the first transmission solution is a transmission solution based on an orthogonal frequency division multiplexing OFDM communication system, and the second transmission solution is a transmission solution based on an orthogonal time frequency space OTFS communication system.

2. The transmission method according to claim 1, wherein in a case that the communication device determines that the target transmission solution of the target signal is the first transmission solution, the method further comprises:
in a case that the communication device is a transmit side of the target signal, after mapping the target signal to a frequency domain or a time-frequency domain, converting, by the communication device, the target signal into a time domain to send the target signal; and
in a case that the communication device is a receive side of the target signal, after receiving the target signal, converting, by the communication device, the target signal into a frequency domain or a time-frequency domain for demodulation.

3. The transmission method according to claim 1, wherein in a case that the communication device determines that the target transmission solution of the target signal is the second transmission solution, the method further comprises:
in a case that the communication device is a transmit side of the target signal, after mapping the target signal to a delay-Doppler domain, converting, by the communication device, the target signal into a time domain to send the target signal; and
in a case that the communication device is a receive side of the target signal, after receiving the target signal, converting, by the communication device, the target signal into a delay-Doppler domain for demodulation.

4. The transmission method according to claim 1, wherein the determining, by a communication device, a target transmission solution of a target signal comprises:
determining, by the communication device, that a target transmission solution of a first part of the target signal is the first transmission solution and a target transmission solution of a second part of the target signal is the second transmission solution, wherein the first part and the second part belong to a same time unit or a same frequency unit.

5. The transmission method according to claim 1, wherein the determining, by a communication device, a target transmission solution of a target signal comprises:
determining, by the communication device, that a target transmission solution of a first channel is the first transmission solution and a target transmission solution of a second channel is the second transmission solution, wherein both the first channel and the second channel are channels that carry the target signal; wherein
in a case that the target signal is an uplink signal, the first channel comprises at least one of the following: a physical uplink shared channel PUSCH, a physical uplink control channel PUCCH, and a physical random access channel PRACH, and the second channel comprises at least one of the following: a physical uplink shared channel PUSCH, a physical uplink control channel PUCCH, and a physical random access channel PRACH;
or
in a case that the target signal is a downlink signal, the first channel comprises at least one of the following: a physical downlink shared channel PDSCH, a physical downlink control channel PDCCH, and a physical broadcast channel PBCH, and the second channel comprises at least one of the following: a physical downlink shared channel PDSCH, a physical downlink control channel PDCCH, and a physical broadcast channel PBCH;
or
in a case that both the communication device and a communication peer end are terminal devices, the first channel comprises at least one of the following: a physical sidelink control channel PSCCH, a physical sidelink shared channel PSSCH, a physical sidelink broadcast channel PSBCH, a physical sidelink discovery channel PSDCH, and a physical sidelink feedback channel PSFCH, and the second channel comprises at least one of the following: a physical sidelink control channel PSCCH, a physical sidelink shared channel PSSCH, a physical sidelink broadcast channel PSBCH, a physical sidelink discovery channel PSDCH, and a physical sidelink feedback channel PSFCH.

6. The transmission method according to any one of claims 1 to 5, wherein the determining, by a communication device, a target transmission solution of a target signal comprises:
determining, by the communication device, the target transmission solution of the target signal based on first information; wherein
the first information comprises at least one of the following:
a relative speed between the communication device and a communication peer end of the communication device;
a quantity of paths between the communication device and the communication peer end;
a signal type of the target signal;
duration elapsed after the target transmission solution is previously used; and
a delay between the communication device and the communication peer end.

7. The transmission method according to claim 6, wherein in a case that the first information comprises the relative speed between the communication device and the communication peer end, the determining, by the communication device, the target transmission solution of the target signal based on first information comprises:
in a case that the communication device determines that the relative speed is less than or equal to a first relative speed threshold, determining that the target transmission solution is the first transmission solution;
or
in a case that the communication device determines that the relative speed is greater than or equal to a second relative speed threshold, determining that the target transmission solution is the second transmission solution.

8. The transmission method according to claim 6, wherein in a case that the first information comprises the quantity of paths between the communication device and the communication peer end, the determining, by the communication device, the target transmission solution of the target signal based on first information comprises:
in a case that the communication device determines that the quantity of paths is less than or equal to a first path quantity threshold, determining that the target transmission solution is the first transmission solution;
or
in a case that the communication device determines that the quantity of paths is greater than or equal to a second path quantity threshold, determining that the target transmission solution is the second transmission solution.

9. The transmission method according to claim 6, wherein in a case that the first information comprises the signal type of the target signal, the determining, by the communication device, the target transmission solution of the target signal based on first information comprises:
in a case that the communication device determines that the signal type of the target signal comprises a sounding reference signal, determining that the target transmission solution is the first transmission solution;
or
in a case that the communication device determines that the signal type of the target signal comprises a demodulation reference signal, determining that the target transmission solution is the second transmission solution.

10. The transmission method according to claim 6, wherein in a case that the first information comprises the duration elapsed after the target transmission solution is previously used, the determining, by the communication device, the target transmission solution of the target signal based on first information comprises:
in a case that the communication device determines that the duration is less than or equal to a first time threshold, determining that the target transmission solution is the first transmission solution;
or
in a case that the communication device determines that the duration is greater than or equal to a second time threshold, determining that the target transmission solution is the second transmission solution.

11. The transmission method according to claim 6, wherein in a case that the first information comprises the delay between the communication device and the communication peer end, the determining, by the communication device, the target transmission solution of the target signal based on first information comprises:
in a case that the communication device determines that the delay is less than or equal to a first delay threshold, determining that the target transmission solution is the first transmission solution;
or
in a case that the communication device determines that the delay is greater than or equal to a second delay threshold, determining that the target transmission solution is the second transmission solution.

12. The transmission method according to any one of claims 7 to 11, wherein in a case that it is determined that the target transmission solution is the second transmission solution, the method further comprises:
determining a target channel code based on the quantity of paths between the communication device and the communication peer end.

13. The transmission method according to claim 12, wherein the determining a target channel code based on the quantity of paths between the communication device and the communication peer end comprises at least one of the following:
determining that the target channel code is a channel code whose bit rate is proportional to the quantity of paths;
determining that the target channel code is a convolutional code whose constraint length is inversely proportional to the quantity of paths;
in a case that the quantity of paths is greater than or equal to a third path quantity threshold, determining that the channel code comprises a channel code whose bit rate is greater than or equal to C;
in a case that the quantity of paths is greater than or equal to a fourth path quantity threshold, determining that the channel code comprises a convolutional code whose constraint length is less than L;
in a case that the quantity of paths is less than a fifth path quantity threshold, determining that the channel code comprises a channel code whose bit rate is less than or equal to C; and
in a case that the quantity of paths is less than a sixth path quantity threshold, determining that the channel code comprises a convolutional code whose constraint length is greater than or equal to L; wherein
C is a positive number greater than 0 and less than 1, and L is a positive integer greater than or equal to 1.

14. The transmission method according to any one of claims 7 to 11 or claim 13, wherein the method further comprises:
after the target transmission solution of the target signal is determined, sending, by the communication device, first indication information to the communication peer end, wherein the first indication information is used to indicate at least one of the following:
the target transmission solution of the target signal;
a transmission parameter of the target transmission solution; and
a channel coding related parameter of the target transmission solution.

15. The transmission method according to claim 14, wherein in a case that the communication device determines that a target transmission solution of a first part of the target signal is the first transmission solution and a target transmission solution of a second part of the target signal is the second transmission solution, the first indication information is specifically used to indicate at least one of the following:
the first part and at least one of the following: the target transmission solution of the first part is the first transmission solution; a transmission parameter of the first transmission solution; and a channel coding related parameter of the first transmission solution; and
the second part and at least one of the following: the target transmission solution of the second part is the second transmission solution; a transmission parameter of the second transmission solution; and a channel coding related parameter of the second transmission solution.

16. The transmission method according to claim 14, wherein in a case that the first indication information is downlink information, the first indication information is carried in at least one of the following:
DCI information;
radio resource control RRC signaling;
layer-1 signaling of a physical downlink control channel PDCCH;
information about a physical downlink shared channel PDSCH;
media access control control element MAC signaling;
a system information block SIB;
MSG 2 information of a physical random access channel PRACH;
MSG 4 information of a physical random access channel PRACH; and
MSG B information of a physical random access channel PRACH;
or
in a case that the first indication information is uplink information, the first indication information is carried in at least one of the following:
layer-1 signaling of a physical uplink control channel PUCCH;
MSG 1 information of a physical random access channel PRACH;
MSG 3 information of a physical random access channel PRACH;
MSG A information of a physical random access channel PRACH; and
information about a physical uplink shared channel PUSCH;
or
in a case that both the communication device and the communication peer end are network side devices, the first indication information is carried in Xn interface signaling;
or
in a case that both the communication device and the communication peer end are terminal devices, the first indication information is carried in at least one of the following:
PCS interface signaling; and
sidelink interface signaling.

17. The transmission method according to claim 14, wherein the first indication information is carried on a dedicated physical channel, and the dedicated physical channel is dedicated to transmission of an indication message between the communication device and the communication peer end.

18. The transmission method according to any one of claims 7 to 11 or claim 13, wherein the method further comprises:
receiving, by the communication device, second indication information sent by the communication peer end, wherein the second indication information comprises at least one of the following:
a speed of the communication peer end;
the relative speed between the communication device and the communication peer end; and
the quantity of paths.

19. The transmission method according to claim 18, wherein in a case that the second indication information is downlink information, the second indication information is carried in at least one of the following:
DCI information;
radio resource control RRC signaling;
layer-1 signaling of a physical downlink control channel PDCCH;
information about a physical downlink shared channel PDSCH;
media access control control element MAC signaling;
a system information block SIB;
MSG 2 information of a physical random access channel PRACH;
MSG 4 information of a physical random access channel PRACH; and
MSG B information of a physical random access channel PRACH;
or
in a case that the second indication information is uplink information, the second indication information is carried in at least one of the following:
layer-1 signaling of a physical uplink control channel PUCCH;
MSG 1 information of a physical random access channel PRACH;
MSG 3 information of a physical random access channel PRACH;
MSG A information of a physical random access channel PRACH; and
information about a physical uplink shared channel PUSCH;
or
in a case that both the communication device and the communication peer end are network side devices, the second indication information is carried in Xn interface signaling;
or
in a case that both the communication device and the communication peer end are terminal devices, the second indication information is carried in at least one of the following:
PCS interface signaling; and
sidelink interface signaling.

20. The transmission method according to claim 18, wherein the second indication information is carried on a dedicated physical channel, and the dedicated physical channel is dedicated to transmission of an indication message between the communication device and the communication peer end.

21. The transmission method according to any one of claims 1 to 5, wherein the determining, by a communication device, a target transmission solution of a target signal comprises:
receiving, by the communication device, third indication information sent by a communication peer end; and
determining, by the communication device, at least one of the following based on the third indication information:
the target transmission solution of the target signal;
a transmission parameter of the target transmission solution; and
a channel coding related parameter of the target transmission solution.

22. The transmission method according to claim 21, wherein the determining, by the communication device, at least one of the following based on the third indication information: the target transmission solution of the target signal, a transmission parameter of the target transmission solution, and a channel coding related parameter of the target transmission solution comprises:
determining, by the communication device, at least one of the following based on the third indication information:
a first part of the target signal and at least one of the following: a target transmission solution of the first part is the first transmission solution; a transmission parameter of the first transmission solution; and a channel coding related parameter of the first transmission solution; and
a second part of the target signal and at least one of the following: a target transmission solution of the second part is the second transmission solution; a transmission parameter of the second transmission solution; and a channel coding related parameter of the second transmission solution.

23. The transmission method according to claim 21, wherein in a case that the third indication information is downlink information, the third indication information is carried in at least one of the following:
DCI information;
radio resource control RRC signaling;
layer-1 signaling of a physical downlink control channel PDCCH;
information about a physical downlink shared channel PDSCH;
media access control control element MAC signaling;
a system information block SIB;
MSG 2 information of a physical random access channel PRACH;
MSG 4 information of a physical random access channel PRACH; and
MSG B information of a physical random access channel PRACH;
or
in a case that the third indication information is uplink information, the third indication information is carried in at least one of the following:
layer-1 signaling of a physical uplink control channel PUCCH;
MSG 1 information of a physical random access channel PRACH;
MSG 3 information of a physical random access channel PRACH;
MSG A information of a physical random access channel PRACH; and
information about a physical uplink shared channel PUSCH;
or
in a case that both the communication device and the communication peer end are network side devices, the third indication information is carried in Xn interface signaling;
or
in a case that both the communication device and the communication peer end are terminal devices, the third indication information is carried in at least one of the following:
PCS interface signaling; and
sidelink interface signaling.

24. The transmission method according to claim 21, wherein the third indication information is carried on a dedicated physical channel, and the dedicated physical channel is dedicated to transmission of an indication message between the communication device and the communication peer end.

25. The transmission method according to any one of claims 1 to 5, wherein the method further comprises:
after determining the target transmission solution of the target signal, determining, by the communication device, at least one of the following based on a predefinition in a protocol:
a transmission parameter of the target transmission solution; and
a channel coding related parameter of the target transmission solution.

26. A transmission apparatus, comprising:
a first determining module, configured to determine a target transmission solution of a target signal, wherein the target transmission solution is a first transmission solution or a second transmission solution; wherein
the first transmission solution is a transmission solution based on an OFDM communication system, and the second transmission solution is a transmission solution based on an OTFS communication system.

27. The transmission apparatus according to claim 26, wherein in a case that a communication device determines that the target transmission solution of the target signal is the first transmission solution, the apparatus further comprises:
a first mapping module, configured to: in a case that the communication device is a transmit side of the target signal, after mapping the target signal to a frequency domain or a time-frequency domain, convert the target signal into a time domain to send the target signal; and
a first conversion module, configured to: in a case that the communication device is a receive side of the target signal, after receiving the target signal, convert the target signal into a frequency domain or a time-frequency domain for demodulation.

28. The transmission apparatus according to claim 26, wherein in a case that the communication device determines that the target transmission solution of the target signal is the second transmission solution, the apparatus further comprises:
a second mapping module, configured to: in a case that the communication device is a transmit side of the target signal, after mapping the target signal to a delay-Doppler domain, convert the target signal into a time domain to send the target signal; and
a second conversion module, configured to: in a case that the communication device is a receive side of the target signal, after receiving the target signal, convert the target signal into a delay-Doppler domain for demodulation.

29. The transmission apparatus according to claim 26, wherein the first determining module is specifically configured to:
determine that a target transmission solution of a first part of the target signal is the first transmission solution and a target transmission solution of a second part of the target signal is the second transmission solution, wherein the first part and the second part belong to a same time unit or a same frequency unit.

30. The transmission apparatus according to claim 26, wherein the first determining module is specifically configured to:
determine that a target transmission solution of a first channel is the first transmission solution and a target transmission solution of a second channel is the second transmission solution, wherein both the first channel and the second channel are channels that carry the target signal; wherein
in a case that the target signal is an uplink signal, the first channel comprises at least one of the following: a physical uplink shared channel PUSCH, a physical uplink control channel PUCCH, and a physical random access channel PRACH, and the second channel comprises at least one of the following: a physical uplink shared channel PUSCH, a physical uplink control channel PUCCH, and a physical random access channel PRACH;
or
in a case that the target signal is a downlink signal, the first channel comprises at least one of the following: a physical downlink shared channel PDSCH, a physical downlink control channel PDCCH, and a physical broadcast channel PBCH, and the second channel comprises at least one of the following: a physical downlink shared channel PDSCH, a physical downlink control channel PDCCH, and a physical broadcast channel PBCH;
or
in a case that both the communication device and a communication peer end are terminal devices, the first channel comprises at least one of the following: a physical sidelink control channel PSCCH, a physical sidelink shared channel PSSCH, a physical sidelink broadcast channel PSBCH, a physical sidelink discovery channel PSDCH, and a physical sidelink feedback channel PSFCH, and the second channel comprises at least one of the following: a physical sidelink control channel PSCCH, a physical sidelink shared channel PSSCH, a physical sidelink broadcast channel PSBCH, a physical sidelink discovery channel PSDCH, and a physical sidelink feedback channel PSFCH.

31. The transmission apparatus according to any one of claims 26 to 30, wherein the first determining module is specifically configured to:
determine the target transmission solution of the target signal based on first information; wherein
the first information comprises at least one of the following:
a relative speed between the communication device and a communication peer end of the communication device;
a quantity of paths between the communication device and the communication peer end;
a signal type of the target signal;
duration elapsed after the target transmission solution is previously used; and
a delay between the communication device and the communication peer end.

32. The transmission apparatus according to claim 31, wherein the first determining module is specifically used for at least one of the following:
in a case that the first information comprises the relative speed between the communication device and the communication peer end and the communication device determines that the relative speed is less than or equal to a first relative speed threshold, determining that the target transmission solution is the first transmission solution;
in a case that the first information comprises the quantity of paths between the communication device and the communication peer end and the communication device determines that the quantity of paths is less than or equal to a first path quantity threshold, determining that the target transmission solution is the first transmission solution;
in a case that the first information comprises the signal type of the target signal and the communication device determines that the signal type of the target signal comprises a sounding reference signal, determining that the target transmission solution is the first transmission solution;
in a case that the first information comprises the duration elapsed after the target transmission solution is previously used and the communication device determines that the duration is less than or equal to a first time threshold, determining that the target transmission solution is the first transmission solution; and
in a case that the first information comprises the delay between the communication device and the communication peer end and the communication device determines that the delay is less than or equal to a first delay threshold, determining that the target transmission solution is the first transmission solution.

33. The transmission apparatus according to claim 31, wherein in a case that the first information comprises the relative speed between the communication device and the communication peer end, the first determining module is specifically configured to:
in a case that the communication device determines that the relative speed is less than or equal to a first relative speed threshold, determine that the target transmission solution is the first transmission solution;
or
in a case that the communication device determines that the relative speed is greater than or equal to a second relative speed threshold, determine that the target transmission solution is the second transmission solution.

34. The transmission apparatus according to claim 31, wherein in a case that the first information comprises the quantity of paths between the communication device and the communication peer end, the first determining module is specifically configured to:
in a case that the communication device determines that the quantity of paths is less than or equal to a first path quantity threshold, determine that the target transmission solution is the first transmission solution;
or
in a case that the communication device determines that the quantity of paths is greater than or equal to a second path quantity threshold, determine that the target transmission solution is the second transmission solution.

35. The transmission apparatus according to claim 31, wherein in a case that the first information comprises the signal type of the target signal, the first determining module is specifically configured to:
in a case that the communication device determines that the signal type of the target signal comprises a sounding reference signal, determine that the target transmission solution is the first transmission solution;
or
in a case that the communication device determines that the signal type of the target signal comprises a demodulation reference signal, determine that the target transmission solution is the second transmission solution.

36. The transmission apparatus according to claim 31, wherein in a case that the first information comprises the duration elapsed after the target transmission solution is previously used, the first determining module is specifically configured to:
in a case that the communication device determines that the duration is less than or equal to a first time threshold, determine that the target transmission solution is the first transmission solution;
or
in a case that the communication device determines that the duration is greater than or equal to a second time threshold, determine that the target transmission solution is the second transmission solution.

37. The transmission apparatus according to claim 31, wherein in a case that the first information comprises the delay between the communication device and the communication peer end, the first determining module is specifically configured to:
in a case that the communication device determines that the delay is less than or equal to a first delay threshold, determining that the target transmission solution is the first transmission solution;
or
in a case that the communication device determines that the delay is greater than or equal to a second delay threshold, determining that the target transmission solution is the second transmission solution.

38. The transmission apparatus according to any one of claims 33 to 37, wherein the apparatus further comprises:
a second determining module, configured to: in a case that it is determined that the target transmission solution is the second transmission solution, determine a target channel code based on the quantity of paths between the communication device and the communication peer end.

39. The transmission apparatus according to claim 38, wherein the second determining module is specifically used for at least one of the following:
determining that the target channel code is a channel code whose bit rate is proportional to the quantity of paths;
determining that the target channel code is a convolutional code whose constraint length is inversely proportional to the quantity of paths;
in a case that the quantity of paths is greater than or equal to a third path quantity threshold, determining that the channel code comprises a channel code whose bit rate is greater than or equal to C;
in a case that the quantity of paths is greater than or equal to the fourth path quantity threshold, determining that the channel code comprises a convolutional code whose constraint length is less than L;
in a case that the quantity of paths is less than a fifth path quantity threshold, determining that the channel code comprises a channel code whose bit rate is less than or equal to C; and
in a case that the quantity of paths is less than a sixth path quantity threshold, determining that the channel code comprises a convolutional code whose constraint length is greater than or equal to L; wherein
C is a positive number greater than 0 and less than 1, and L is a positive integer greater than or equal to 1.

40. The transmission apparatus according to any one of claims 33 to 37 or claim 39, wherein the apparatus further comprises:
a first sending module, configured to: after the target transmission solution of the target signal is determined, send first indication information to the communication peer end, wherein the first indication information is used to indicate at least one of the following:
the target transmission solution of the target signal;
a transmission parameter of the target transmission solution; and
a channel coding related parameter of the target transmission solution.

41. The transmission apparatus according to claim 40, wherein in a case that the communication device determines that a target transmission solution of a first part of the target signal is the first transmission solution and a target transmission solution of a second part of the target signal is the second transmission solution, the first indication information is specifically used to indicate at least one of the following:
the first part and at least one of the following: the target transmission solution of the first part is the first transmission solution; a transmission parameter of the first transmission solution; and a channel coding related parameter of the first transmission solution; and
the second part and at least one of the following: the target transmission solution of the second part is the second transmission solution; a transmission parameter of the second transmission solution; and a channel coding related parameter of the second transmission solution.

42. The transmission apparatus according to any one of claims 33 to 37 or claim 39, wherein the apparatus further comprises:
a first receiving module, configured to receive second indication information sent by the communication peer end, wherein the second indication information comprises at least one of the following:
a speed of the communication peer end;
the relative speed between the communication device and the communication peer end; and
the quantity of paths.

43. The transmission apparatus according to any one of claims 26 to 30, wherein the first determining module is specifically configured to:
receive third indication information sent by a communication peer end; and
determine at least one of the following based on the third indication information:
the target transmission solution of the target signal;
a transmission parameter of the target transmission solution; and
a channel coding related parameter of the target transmission solution.

44. The transmission apparatus according to claim 43, wherein the first determining module is specifically configured to:
determine at least one of the following based on the third indication information:
a first part of the target signal and at least one of the following: a target transmission solution of the first part is the first transmission solution; a transmission parameter of the first transmission solution; and a channel coding related parameter of the first transmission solution; and
a second part of the target signal and at least one of the following: a target transmission solution of the second part is the second transmission solution; a transmission parameter of the second transmission solution; and a channel coding related parameter of the second transmission solution.

45. A communication device, comprising a processor, a memory, and a program or an instruction stored in the memory and executable on the processor, wherein when the program or the instruction is executed by the processor, steps of the transmission method according to any one of claims 1 to 25 are implemented.

46. A readable storage medium, wherein the readable storage medium stores a program or an instruction, and when the program or the instruction is executed by a processor, steps of the transmission method according to any one of claims 1 to 25 are implemented.
